(19) **Europäisches Patentamt / European Patent Office / Office européen des brevets**

(11) **EP 4 644 940 A2**

(12) **EUROPEAN PATENT APPLICATION**

(43) Date of publication:
**05.11.2025 Bulletin 2025/45**

(21) Application number: **25202012.8**

(22) Date of filing: **14.07.2023**

(51) International Patent Classification (IPC):
*G01S 5/12* *(2006.01)*

(52) Cooperative Patent Classification (CPC):
**G01S 5/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.08.2022 GR 20220100697**

(62) Document number(s) of the earlier application(s) in
accordance with Art. 76 EPC:
**23754941.5 / 4 573 386**

(71) Applicant: **QUALCOMM Incorporated
San Diego, CA 92121-1714 (US)**

(72) Inventors:
- **DUAN, Weimin
  San Diego, 92121-1714 (US)**
- **MANOLAKOS, Alexandros
  San Diego, 92121-1714 (US)**

(74) Representative: **Reddie & Grose LLP
The White Chapel Building
10 Whitechapel High Street
London E1 8QS (GB)**

Remarks:
This application was filed on 12.09.2025 as a
divisional application to the application mentioned
under INID code 62.

(54) **OUT-OF-COVERAGE UE POSITIONING WITH SIDE- LINK**

(57)    In some implementations, a method of enabling positioning of a first mobile device may comprise obtaining a differential angle-of-arrival (AoA) between (a) a first AoA of a first wireless reference signal at a second mobile device and (b) a second AoA of a second wireless reference signal at the second mobile device. The first wireless reference signal is transmitted by a third mobile device, and the second wireless reference signal is transmitted by the first mobile device. The method also may comprise determining a position of the first mobile device based at least in part on the differential AoA. The method also may comprise providing the position of the first mobile device.

EP 4 644 940 A2

## Description

RELATED APPLICATIONS

This application claims the benefit of Greek Application No. 20220100697, filed August 18, 2022, entitled "OUT-OF-COVERAGE UE POSITIONING WITH SIDE-LINK", which is assigned to the assignee hereof, and incorporated herein in its entirety by reference.

BACKGROUND

1. Field of Invention

The present invention relates generally to the field of wireless communications, and more specifically to determining the location (or position) of a User Equipment (UE) using radiofrequency (RF) signals.

2. Description of Related Art

In a data communication network, various positioning techniques can be used to determine the position of a mobile device (referred to herein as a user equipment or a UE). Some of these positioning techniques may involve the use of an "anchor" UE to help determine the location of a "target" UE, in which case the anchor UE may take measurements of RF signals to determine distance and/or angular information of the target UE. Angle of Arrival (AoA) measurements are one way in which an anchor UE may obtain angular information, but accurate AoA measurements can be difficult to make if the orientation of the anchor UE is unknown. Furthermore, positioning of the target UE is made more challenging when the target UE and/or the anchor UE are out of coverage of a base station.

BRIEF SUMMARY

An example method of enabling positioning of a first mobile device, according to this disclosure, may comprise obtaining a differential angle-of-arrival (AoA) between (a) a first AoA of a first wireless reference signal at a second mobile device and (b) a second AoA of a second wireless reference signal at the second mobile device. The first wireless reference signal is transmitted by a third mobile device, and the second wireless reference signal is transmitted by the first mobile device. The method also may comprise determining a position of the first mobile device based at least in part on the differential AoA. The method also may comprise providing the position of the first mobile device.

An example device enabling positioning of a first mobile device, according to this disclosure, may comprise a transceiver, a memory, one or more processing units communicatively coupled with the transceiver and the memory. The one or more processing units may be configured to obtain a differential angle-of-arrival (AoA) between (a) a first AoA of a first wireless reference signal at a second mobile device and (b) a second AoA of a second wireless reference signal at the second mobile device. The first wireless reference signal is transmitted by a third mobile device, and the second wireless reference signal is transmitted by the first mobile device. The one or more processors further may be configured to determine a position of the first mobile device based at least in part on the differential AoA. The one or more processors further may be configured to provide the position of the first mobile device.

An example device enabling positioning of a first mobile device, according to this disclosure, may comprise means for obtaining a differential angle-of-arrival (AoA) between (a) a first AoA of a first wireless reference signal at a second mobile device and (b) a second AoA of a second wireless reference signal at the second mobile device. The first wireless reference signal is transmitted by a third mobile device, and the second wireless reference signal is transmitted by the first mobile device. The device may further comprise means for determining a position of the first mobile device based at least in part on the differential AoA and means for providing the position of the first mobile device.

According to this disclosure, an example non-transitory computer-readable medium stores instructions for enabling positioning of a first mobile device. The instructions may comprise code for obtaining a differential angle-of-arrival (AoA) between (a) a first AoA of a first wireless reference signal at a second mobile device and (b) a second AoA of a second wireless reference signal at the second mobile device. The first wireless reference signal is transmitted by a third mobile device, and the second wireless reference signal is transmitted by the first mobile device. The instructions may further comprise code for determining a position of the first mobile device based at least in part on the differential AoA. The instructions may further comprise code for providing the position of the first mobile device.

BRIEF DESCRIPTION OF THE DRAWINGS

FIG. 1 is a diagram of a positioning system, according to an embodiment.

FIG. 2 is a diagram of a 5th Generation (5G) New Radio (NR) positioning system, illustrating an embodiment of a positioning system (e.g., the positioning system of FIG. 1) implemented within a 5G NR communication system.

FIG. 3 is a diagram illustrating beamforming in a 5G NR positioning system.

FIG. 4 is a simplified diagram illustrating how position determination of a target User Equipment (UE) may be made using an anchor UE and an initiative UE, according to an embodiment.

FIGS. 5A and 5B are diagrams of a target UE, an anchor UE, and an initiative UE provided to illustrate how beams may be used differently in different embodiments and/or situations, depending on desired functionality.

FIG. 6 is a diagram illustrating a configuration for resolving ambiguity in the position determination of a target UE, according to an embodiment.

FIG. 7 is a simplified diagram illustrating how multiple anchor UEs may be used to resolve ambiguity in a target UE's location, according to an embodiment.

FIG. 8 is a call-flow diagram of processes of performing position determination of a target UE, according to some embodiments.

FIG. 9 illustrates a coordinated schedule for transmission and measurement of wireless reference signals to support use of differential AoA in position determination of a target UE, according to some embodiments.

FIG. 10 illustrates a coordinated schedule for transmission and measurement of wireless reference signals to support use of multilateration based on a plurality of range sums in position determination of a target UE, according to some embodiments.

FIGs. 11A and 11B illustrate different strategies for dynamically scheduling transmissions and measurements of wireless reference signals for position determination, according to some embodiments.

FIG. 12 is a flow diagram of a method of enabling low-power positioning of a first mobile device using differential AoA, according to an embodiment.

FIG. 13 is a flow diagram of a method of enabling positioning of a first mobile device using multilateration based on a plurality of range sums, according to an embodiment.

FIG. 14 is a block diagram of an embodiment of a mobile device, which can be utilized in embodiments as described herein.

FIG. 15 is a block diagram of an embodiment of a computer system, which can be utilized in embodiments as described herein.

Like reference symbols in the various drawings indicate like elements, in accordance with certain example implementations. In addition, multiple instances of an element may be indicated by following a first number for the element with a letter or a hyphen and a second number. For example, multiple instances of an element 110 may be indicated as 110-1, 110-2, 110-3 etc. or as 110a, 110b, 110c, etc. When referring to such an element using only the first number, any instance of the element is to be understood (e.g., element 110 in the previous example would refer to elements 110-1, 110-2, and 110-3 or to elements 110a, 110b, and 110c).

DETAILED DESCRIPTION

Several illustrative embodiments will now be described with respect to the accompanying drawings, which form a part hereof. While some embodiments in which one or more aspects of the disclosure may be implemented as described below, other embodiments may be used, and various modifications may be made without departing from the scope of the disclosure.

As used herein, an "RF signal" or "reference signal" comprises an electromagnetic wave that transports information through the space between a transmitter (or transmitting device) and a receiver (or receiving device). As used herein, a transmitter may transmit a single RF/reference signal or multiple RF/reference signals to a receiver. However, the receiver (or different receivers) may receive multiple RF/reference signals corresponding to each transmitted RF signal due to the propagation characteristics of RF signals through multipath channels. The same transmitted RF signal on different paths between the transmitter and receiver may be referred to as a "multipath" RF signal.

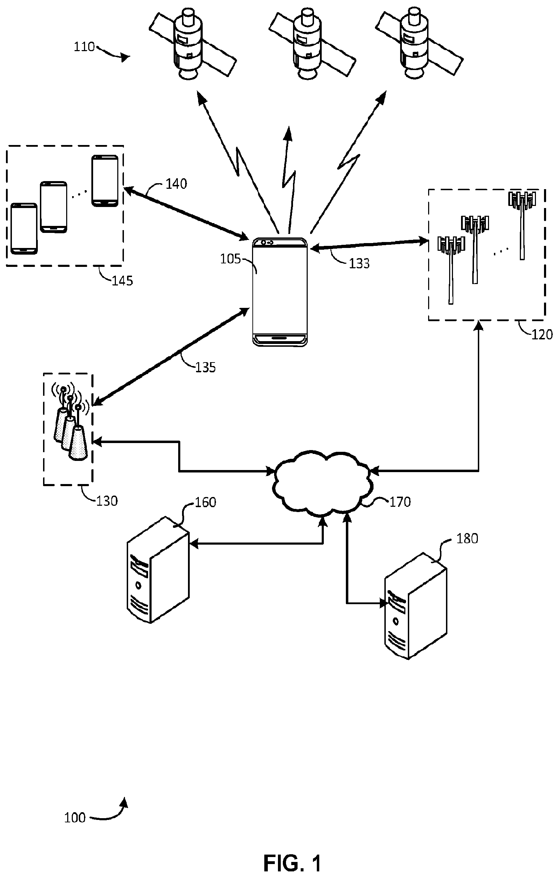

**FIG. 1** is a simplified illustration of a positioning system 100 in which a UE 105, location server 160, and/or other components of the positioning system 100 can use the techniques provided herein for determining differential Angle of Arrival (AoA) for low power mobile device positioning of UE 105, according to an embodiment. The techniques described herein may be implemented by one or more components of the positioning system 100. The positioning system 100 can include: a UE 105; one or more satellites 110 (also referred to as space vehicles (SVs)) for a Global Navigation Satellite System (GNSS) such as the Global Positioning System (GPS), GLONASS, Galileo or Beidou; base stations 120; access points (APs) 130; location server 160; network 170; and external client 180. Generally put, the positioning system 100 can estimate a location of the UE 105 based on RF signals received by and/or sent from the UE 105 and known locations of other components (e.g., GNSS satellites 110, base stations 120, APs 130) transmitting and/or receiving the RF signals.

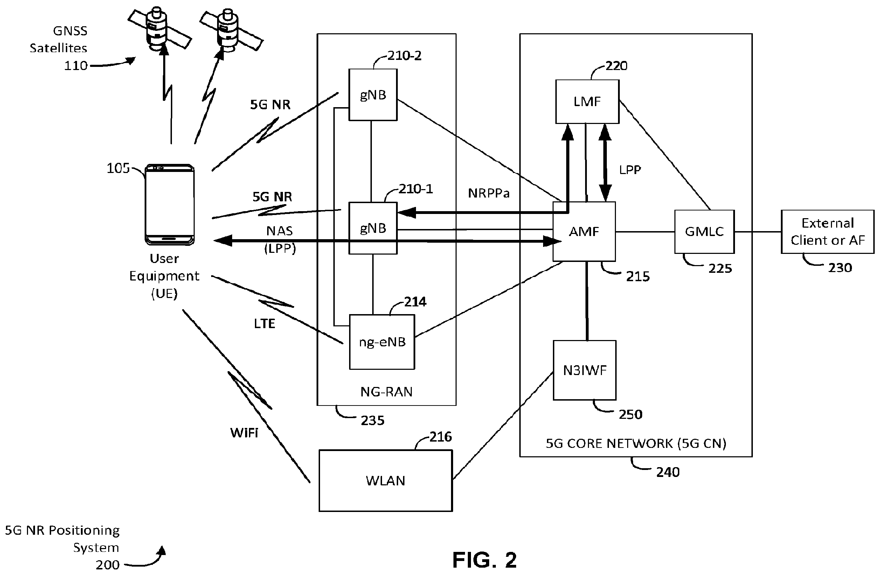

Additional details regarding particular location estimation techniques are discussed in more detail with regard to FIG. 2.

It should be noted that FIG. 1 provides only a generalized illustration of various components, any or all of which may be utilized as appropriate, and each of which may be duplicated as necessary. Specifically, although only one UE 105 is illustrated, it will be understood that many UEs (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to location server 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include a Long-Term Evolution (LTE) wireless network, a Fifth Generation (5G) wireless network (also referred to as New Radio (NR) wireless network or 5G NR wireless network), a Wi-Fi WLAN, and the Internet. LTE, 5G and NR are wireless technologies defined, or being defined, by the 3rd Generation Partnership Project (3GPP). Network 170 may also include more than one network and/or more than one type of network.

The base stations 120 and access points (APs) 130 are communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. An AP 130 may comprise a Wi-Fi AP or a Bluetooth® AP, for example. Thus, UE 105 can send and receive information with network-connected devices, such as location server 160, by accessing the network 170 via a base station 120 using a first communication link 133. Additionally or alternatively, because APs 130 also may be communicatively coupled with the network 170, UE 105 may communicate with network-connected and Internet-connected devices, including location server 160, using a second communication link 135.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." In some cases, a base station 120 may comprise multiple TRPs - e.g. with each TRP associated with a different antenna or a different antenna array for the base station 120. Physical transmission points may comprise an array of antennas of a base station 120 (e.g., as in a Multiple Input-Multiple Output (MIMO) system and/or where the base station employs beamforming). The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station).

As used herein, the term "cell" may generically refer to a logical communication entity used for communication with a base station 120, and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

The location server 160 may comprise a server and/or other computing device configured to determine an estimated location of UE 105 and/or provide data (e.g., "assistance data") to UE 105 to facilitate location measurement and/or location determination by UE 105. According to some embodiments, location server 160 may comprise a Home Secure User Plane Location (SUPL) Location Platform (H-SLP), which may support the SUPL user plane (UP) location solution defined by the Open Mobile Alliance (OMA) and may support location services for UE 105 based on subscription information for UE 105 stored in location server 160. In some embodiments, the location server 160 may comprise, a Discovered SLP (D-SLP) or an Emergency SLP (E-SLP). The location server 160 may also comprise an Enhanced Serving Mobile Location Center (E-SMLC) that supports location of UE 105 using a control plane (CP) location solution for LTE radio access by UE 105. The location server 160 may further comprise a Location Management Function (LMF) that supports location of UE 105 using a control plane (CP) location solution for NR or LTE radio access by UE 105.

In a CP location solution, signaling to control and manage the location of UE 105 may be exchanged between elements of network 170 and with UE 105 using existing network interfaces and protocols and as signaling from the perspective of network 170. In a UP location solution, signaling to control and manage the location of UE 105 may be exchanged between location server 160 and UE 105 as data (e.g. data transported using the Internet Protocol (IP) and/or Transmission Control Protocol (TCP)) from the perspective of network 170.

As previously noted (and discussed in more detail below), the estimated location of UE 105 may be based on measurements of RF signals sent from and/or received by the UE 105. In particular, these measurements can provide information regarding the relative distance and/or angle of the UE 105 from one or more components in the positioning system 100 (e.g., GNSS satellites 110, APs 130, base stations 120). The estimated location of the UE 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. For example, in some embodiments, a location of the UE 105 may be estimated at least in part based on measurements of RF signals 140 communicated between the UE 105 and one or more other UEs 145, which may be mobile or fixed. When or more other UEs 145 are used in the position determination of a particular UE 105, the UE 105 for which the position is to be determined may be referred to as the "target UE," and each of the one or more other UEs 145 used may be referred to as an "anchor UE." For position determination of a target UE, the respective positions of the one or more anchor UEs may be known and/or jointly determined with the target UE. Direct communication between the one or more other UEs 145 and UE 105 may comprise sidelink and/or similar Device-to-Device (D2D) communication technologies. Sidelink, which is defined by 3GPP, is a form of D2D communication under the cellular-based LTE and NR standards.

An estimated location of UE 105 can be used in a variety of applications - e.g. to assist direction finding or navigation for a user of UE 105 or to assist another user (e.g. associated with external client 180) to locate UE 105. A "location" is also referred to herein as a "location estimate", "estimated location", "location", "position", "position estimate", "position fix", "estimated position", "location fix" or "fix". The process of determining a location may be referred to as "positioning," "position determination," "location determination," or the like. A location of UE 105 may comprise an absolute location of UE 105 (e.g. a latitude and longitude and possibly altitude) or a relative location of UE 105 (e.g. a location expressed as distances north or south, east or west and possibly above or below some other known fixed location or some other location such as a location for UE 105 at some known previous time). A location may be specified as a geodetic location comprising coordinates which may be absolute (e.g. latitude, longitude and optionally altitude), relative (e.g. relative to some known absolute location) or local (e.g. X, Y and optionally Z coordinates according to a coordinate system defined relative to a local area such a factory, warehouse, college campus, shopping mall, sports stadium or convention center). A location may instead be a civic location and may then comprise one or more of a street address (e.g. including names or labels for a country, state, county, city, road and/or street, and/or a road or street number), and/or a label or name for a place, building, portion of a building, floor of a building, and/or room inside a building etc. A location may further include an uncertainty or error indication, such as a horizontal and possibly vertical distance by which the location is expected to be in error or an indication of an area or volume (e.g. a circle or ellipse) within which UE 105 is expected to be located with some level of confidence (e.g. 95% confidence).

The external client 180 may be a web server or remote application that may have some association with UE 105 (e.g. may be accessed by a user of UE 105) or may be a server, application, or computer system providing a location service to some other user or users which may include obtaining and providing the location of UE 105 (e.g. to enable a service such as friend or relative finder, asset tracking or child or pet location). Additionally or alternatively, the external client 180 may obtain and provide the location of UE 105 to an emergency services provider, government agency, etc.

As previously noted, the example positioning system 100 can be implemented using a wireless communication network, such as an LTE-based or 5G NR-based network. **FIG. 2** shows a diagram of a 5G NR positioning system 200, illustrating an embodiment of a positioning system (e.g., positioning system 100) implementing 5G NR. The 5G NR positioning system 200 may be configured to determine the location of a UE 105 by using access nodes 210, 214, 216 (which may correspond with base stations 120 and access points 130 of FIG. 1) and (optionally) an LMF 220 (which may correspond with location server 160) to implement one or more positioning methods. Here, the 5G NR positioning system 200 comprises a UE 105, and components of a 5G NR network comprising a Next Generation (NG) Radio Access Network (RAN) (NG-RAN) 235 and a 5G Core Network (5G CN) 240. A 5G network may also be referred to as an NR network; NG-RAN 235 may be referred to as a 5G RAN or as an NR RAN; and 5G CN 240 may be referred to as an NG Core network. The 5G NR positioning system 200 may further utilize information from GNSS satellites 110 from a GNSS system like Global Positioning System (GPS) or similar system (e.g. GLONASS, Galileo, Beidou, IRNSS). Additional components of the 5G NR positioning system 200 are described below. The 5G NR positioning system 200 may include additional or alternative components.

It should be noted that FIG. 2 provides only a generalized illustration of various components, any or all of which may be utilized as appropriate, and each of which may be duplicated or omitted as necessary. Specifically, although only one UE 105 is illustrated, it will be understood that many UEs (e.g., hundreds, thousands, millions, etc.) may utilize the 5G NR positioning system 200. Similarly, the 5G NR positioning system 200 may include a larger (or smaller) number of GNSS satellites 110, gNBs 210, ng-eNBs 214, Wireless Local Area Networks (WLANs) 216, Access and mobility Management Functions (AMF)s 215, external clients 230, and/or other components. The illustrated connections that connect the various components in the 5G NR positioning system 200 include data and signaling connections which may include additional (intermediary) components, direct or indirect physical and/or wireless connections, and/or additional networks. Furthermore, components may be rearranged, combined, separated, substituted, and/or omitted, depending on desired functionality.

The UE 105 may comprise and/or be referred to as a device, a mobile device, a wireless device, a mobile terminal, a terminal, a mobile station (MS), a Secure User Plane Location (SUPL)-Enabled Terminal (SET), or by some other name. Moreover, UE 105 may correspond to a cellphone, smartphone, laptop, tablet, personal data assistant (PDA), tracking device, navigation device, Internet of Things (IoT) device, or some other portable or moveable device. Typically, though not necessarily, the UE 105 may support wireless communication using one or more Radio Access Technologies (RATs) such as using GSM, Code-division multiple access (CDMA), Wideband CDMA (W-CDMA), LTE, High Rate Packet Data (HRPD), IEEE 802.11 Wi-Fi®, Bluetooth, Worldwide Interoperability for Microwave Access (WiMAX™), 5G NR (e.g., using the NG-RAN 235 and 5G CN 240), etc. The UE 105 may also support wireless communication using a WLAN 216 which (like the one or more RATs, and as previously noted with respect to FIG. 1) may connect to other networks, such as the Internet. The use of one or more of these RATs may allow the UE 105 to communicate with an external client 230 (e.g., via elements of 5G CN 240 not shown in FIG. 2, or possibly via a Gateway Mobile Location Center (GMLC) 225) and/or allow the external client 230 to receive location information regarding the UE 105 (e.g., via the GMLC 225). The external client 230 of FIG. 2 may correspond to external client 180 of FIG. 1, as implemented in or communicatively coupled with a 5G NR network.

The UE 105 may include a single entity or may include multiple entities, such as in a personal area network where a user may employ audio, video and/or data I/O devices, and/or body sensors and a separate wireline or wireless modem. An estimate of a location of the UE 105 may be referred to as a location, location estimate, location fix, fix, position, position estimate, or position fix, and may be geodetic, thus providing location coordinates for the UE 105 (e.g., latitude and longitude), which may or may not include an altitude component (e.g., height above sea level, height above or depth below ground level, floor level or basement level). Alternatively, a location of the UE 105 may be expressed as a civic location (e.g., as a postal address or the designation of some point or small area in a building such as a particular room or floor). A location of the UE 105 may also be expressed as an area or volume (defined either geodetically or in civic form) within which the UE 105 is expected to be located with some probability or confidence level (e.g., 67%, 95%, etc.). A location of the UE 105 may further be a relative location comprising, for example, a distance and direction or relative X, Y (and Z) coordinates defined relative to some origin at a known location which may be defined geodetically, in civic terms, or by reference to a point, area, or volume indicated on a map, floor plan or building plan. In the description contained herein, the use of the term location may comprise any of these variants unless indicated otherwise. When computing the location of a UE, it is common to solve for local X, Y, and possibly Z coordinates and then, if needed, convert the local coordinates into absolute ones (e.g. for latitude, longitude and altitude above or below mean sea level).

Base stations in the NG-RAN 235 shown in FIG. 2 may correspond to base stations 120 in FIG. 1 and may include NR NodeB (gNB) 210-1 and 210-2 (collectively and generically referred to herein as gNBs 210). Pairs of gNBs 210 in NG-RAN 235 may be connected to one another (e.g., directly as shown in FIG. 2 or indirectly via other gNBs 210). Access to the 5G network is provided to UE 105 via wireless communication between the UE 105 and one or more of the gNBs 210, which may provide wireless communications access to the 5G CN 240 on behalf of the UE 105 using 5G NR. 5G NR radio access may also be referred to as NR radio access or as 5G radio access. In FIG. 2, the serving gNB for UE 105 is assumed to be gNB 210-1, although other gNBs (e.g. gNB 210-2) may act as a serving gNB if UE 105 moves to another location or may act as a secondary gNB to provide additional throughput and bandwidth to UE 105.

Base stations in the NG-RAN 235 shown in FIG. 2 may also or instead include a next generation evolved Node B, also referred to as an ng-eNB, 214. Ng-eNB 214 may be connected to one or more gNBs 210 in NG-RAN 235-e.g. directly or indirectly via other gNBs 210 and/or other ng-eNBs. An ng-eNB 214 may provide LTE wireless access and/or evolved LTE (eLTE) wireless access to UE 105. Some gNBs 210 (e.g. gNB 210-2) and/or ng-eNB 214 in FIG. 2 may be configured to function as positioning-only beacons which may transmit signals (e.g., Positioning Reference Signal (PRS)) and/or may broadcast assistance data to assist positioning of UE 105 but may not receive signals from UE 105 or from other UEs. It is noted that while only one ng-eNB 214 is shown in FIG. 2, some embodiments may include multiple ng-eNBs 214. Base stations 210, 214 may communicate directly with one another via an Xn communication interface. Additionally or alternatively, base stations 210, 214 may communicate directly or indirectly with other components of the 5G NR positioning system 200, such as the LMF 220 and AMF 215.

5G NR positioning system 200 may also include one or more WLANs 216 which may connect to a Non-3GPP InterWorking Function (N3IWF) 250 in the 5G CN 240 (e.g., in the case of an untrusted WLAN 216). For example, the WLAN 216 may support IEEE 802.11 Wi-Fi access for UE 105 and may comprise one or more Wi-Fi APs (e.g., APs 130 of FIG. 1). Here, the N3IWF 250 may connect to other elements in the 5G CN 240 such as AMF 215. In some embodiments, WLAN 216 may support another RAT such as Bluetooth. The N3IWF 250 may provide support for secure access by UE 105 to other elements in 5G CN 240 and/or may support interworking of one or more protocols used by WLAN 216 and UE 105 to one or more protocols used by other elements of 5G CN 240 such as AMF 215. For example, N3IWF 250 may support IPSec tunnel establishment with UE 105, termination of IKEv2/IPSec protocols with UE 105, termination of N2 and N3 interfaces to 5G CN 240 for control plane and user plane, respectively, relaying of uplink (UL) and downlink (DL) control plane Non-Access Stratum (NAS) signaling between UE 105 and AMF 215 across an N1 interface. In some other embodiments, WLAN 216 may connect directly to elements in 5G CN 240 (e.g. AMF 215 as shown by the dashed line in FIG. 2) and not via N3IWF 250. For example, direct connection of WLAN 216 to 5GCN 240 may occur if WLAN 216 is a trusted WLAN for 5GCN 240 and may be enabled using a Trusted WLAN Interworking Function (TWIF) (not shown in FIG. 2) which may be an element inside WLAN 216. It is noted that while only one WLAN 216 is shown in FIG. 2, some embodiments may include multiple WLANs 216.

Access nodes may comprise any of a variety of network entities enabling communication between the UE 105 and the AMF 215. This can include gNBs 210, ng-eNB 214, WLAN 216, and/or other types of cellular base stations. However, access nodes providing the functionality described herein may additionally or alternatively include entities enabling communications to any of a variety of RATs not illustrated in FIG. 2, which may include non-cellular technologies. Thus, the term "access node," as used in the embodiments described herein below, may include but is not necessarily limited to a gNB 210, ng-eNB 214 or WLAN 216.

In some embodiments, an access node, such as a gNB 210, ng-eNB 214, or WLAN 216 (alone or in combination with other components of the 5G NR positioning system 200), may be configured to, in response to receiving a request for location information from the LMF 220, obtain location measurements of uplink (UL) signals received from the UE 105) and/or obtain downlink (DL) location measurements from the UE 105 that were obtained by UE 105 for DL signals received by UE 105 from one or more ANs. As noted, while FIG. 2 depicts access nodes 210, 214, and 216 configured to communicate according to 5G NR, LTE, and Wi-Fi communication protocols, respectively, access nodes configured to communicate according to other communication protocols may be used, such as, for example, a Node B using a WCDMA protocol for a Universal Mobile Telecommunications Service (UMTS) Terrestrial Radio Access Network (UTRAN), an eNB using an LTE protocol for an Evolved UTRAN (E-UTRAN), or a Bluetooth® beacon using a Bluetooth protocol for a WLAN. For example, in a 4G Evolved Packet System (EPS) providing LTE wireless access to UE 105, a RAN may comprise an E-UTRAN, which may comprise base stations comprising eNBs supporting LTE wireless access. A core network for EPS may comprise an Evolved Packet Core (EPC). An EPS may then comprise an E-UTRAN plus an EPC, where the E-UTRAN corresponds to NG-RAN 235 and the EPC corresponds to 5GCN 240 in FIG. 2. The methods and techniques described herein for obtaining a civic location for UE 105 may be applicable to such other networks.

The gNBs 210 and ng-eNB 214 can communicate with an AMF 215, which, for positioning functionality, communicates with an LMF 220. The AMF 215 may support mobility of the UE 105, including cell change and handover of UE 105 from an access node 210, 214, or 216 of a first RAT to an access node 210, 214, or 216 of a second RAT. The AMF 215 may also participate in supporting a signaling connection to the UE 105 and possibly data and voice bearers for the UE 105. The LMF 220 may support positioning of the UE 105 using a CP location solution when UE 105 accesses the NG-RAN 235 or WLAN 216 and may support position procedures and methods, including UE assisted/UE based and/or network based procedures/methods, such as Assisted GNSS (A-GNSS), Observed Time Difference Of Arrival (OTDOA) (which may be referred to in NR as DL Time Difference Of Arrival (DL-TDOA)), Real Time Kinematic (RTK), Precise Point Positioning (PPP), Differential GNSS (DGNSS), Enhance Cell ID (ECID), angle of arrival (AOA), angle of departure (AOD), WLAN positioning, round trip signal propagation delay (RTT), multi-cell RTT, and/or other positioning procedures and methods. The LMF 220 may also process location service requests for the UE 105, e.g., received from the AMF 215 or from the GMLC 225. The LMF 220 may be connected to AMF 215 and/or to GMLC 225. In some embodiments, a network such as 5GCN 240 may additionally or alternatively implement other types of location-support modules, such as an Evolved Serving Mobile Location Center (E-SMLC) or a SUPL Location Platform (SLP). It is noted that in some embodiments, at least part of the positioning functionality (including determination of a UE 105's location) may be performed at the UE 105 (e.g., by measuring downlink PRS (DL-PRS) signals transmitted by wireless nodes such as gNBs 210, ng-eNB 214 and/or WLAN 216, and/or using assistance data provided to the UE 105, e.g., by LMF 220).

The Gateway Mobile Location Center (GMLC) 225 may support a location request for the UE 105 received from an external client 230 and may forward such a location request to the AMF 215 for forwarding by the AMF 215 to the LMF 220. A location response from the LMF 220 (e.g., containing a location estimate for the UE 105) may be similarly returned to the GMLC 225 either directly or via the AMF 215, and the GMLC 225 may then return the location response (e.g., containing the location estimate) to the external client 230.

A Network Exposure Function (NEF) 245 may be included in 5GCN 240. The NEF 245 may support secure exposure of capabilities and events concerning 5GCN 240 and UE 105 to the external client 230, which may then be referred to as an Access Function (AF) and may enable secure provision of information from external client 230 to 5GCN 240. NEF 245 may be connected to AMF 215 and/or to GMLC 225 for the purposes of obtaining a location (e.g. a civic location) of UE 105 and providing the location to external client 230.

As further illustrated in FIG. 2, the LMF 220 may communicate with the gNBs 210 and/or with the ng-eNB 214 using an NR Positioning Protocol A (NRPPa) as defined in 3GPP Technical Specification (TS) 38.445. NRPPa messages may be transferred between a gNB 210 and the LMF 220, and/or between an ng-eNB 214 and the LMF 220, via the AMF 215. As further illustrated in FIG. 2, LMF 220 and UE 105 may communicate using an LTE Positioning Protocol (LPP) as defined in 3GPP TS 37.355. Here, LPP messages may be transferred between the UE 105 and the LMF 220 via the AMF 215 and a serving gNB 210-1 or serving ng-eNB 214 for UE 105. For example, LPP messages may be transferred between the LMF 220 and the AMF 215 using messages for service-based operations (e.g., based on the Hypertext Transfer Protocol (HTTP)) and may be transferred between the AMF 215 and the UE 105 using a 5G NAS protocol. The LPP protocol may be used to support positioning of UE 105 using UE assisted and/or UE based position methods such as A-GNSS, RTK, OTDOA, multi-cell RTT, AOD, and/or ECID. The NRPPa protocol may be used to support positioning of UE 105 using network based position methods such as ECID, AOA, uplink TDOA (UL-TDOA) and/or may be used by LMF 220 to obtain location related information from gNBs 210 and/or ng-eNB 214, such as parameters defining DL-PRS transmission from gNBs 210 and/or ng-eNB 214.

In the case of UE 105 access to WLAN 216, LMF 220 may use NRPPa and/or LPP to obtain a location of UE 105 in a similar manner to that just described for UE 105 access to a gNB 210 or ng-eNB 214. Thus, NRPPa messages may be transferred between a WLAN 216 and the LMF 220, via the AMF 215 and N3IWF 250 to support network-based positioning of UE 105 and/or transfer of other location information from WLAN 216 to LMF 220. Alternatively, NRPPa messages may be transferred between N3IWF 250 and the LMF 220, via the AMF 215, to support network-based positioning of UE 105 based on location related information and/or location measurements known to or accessible to N3IWF 250 and transferred from N3IWF 250 to LMF 220 using NRPPa. Similarly, LPP and/or LPP messages may be transferred between the UE 105 and the LMF 220 via the AMF 215, N3IWF 250, and serving WLAN 216 for UE 105 to support UE assisted or UE based positioning of UE 105 by LMF 220.

In a 5G NR positioning system 200, positioning methods can be categorized as being "UE assisted" or "UE based." This may depend on where the request for determining the position of the UE 105 originated. If, for example, the request originated at the UE (e.g., from an application, or "app," executed by the UE), the positioning method may be categorized as being UE based. If, on the other hand, the request originates from an external client or AF 230, LMF 220, or other device or service within the 5G network, the positioning method may be categorized as being UE assisted (or "network-based").

With a UE-assisted position method, UE 105 may obtain location measurements and send the measurements to a location server (e.g., LMF 220) for computation of a location estimate for UE 105. For RAT-dependent position methods location measurements may include one or more of a Received Signal Strength Indicator (RSSI), Round Trip signal propagation Time (RTT), Reference Signal Received Power (RSRP), Reference Signal Received Quality (RSRQ), Reference Signal Time Difference (RSTD), Time of Arrival (ToA), AoA, Receive Time-Transmission Time Difference (Rx-Tx), Differential AoA, AoD, or Timing Advance (TA) for gNBs 210, ng-eNB 214, and/or one or more access points for WLAN 216. Additionally or alternatively, similar measurements may be made of sidelink signals transmitted by other UEs, which may serve as anchor points for positioning of the UE 105 if the positions of the other UEs are known. The location measurements may also or instead include measurements for RAT-independent positioning methods such as GNSS (e.g., GNSS pseudorange, GNSS code phase, and/or GNSS carrier phase for GNSS satellites 110), WLAN, etc.

With a UE-based position method, UE 105 may obtain location measurements (e.g., which may be the same as or similar to location measurements for a UE assisted position method) and may further compute a location of UE 105 (e.g., with the help of assistance data received from a location server such as LMF 220, an SLP, or broadcast by gNBs 210, ng-eNB 214, or WLAN 216).

With a network based position method, one or more base stations (e.g., gNBs 210 and/or ng-eNB 214), one or more APs (e.g., in WLAN 216), or N3IWF 250 may obtain location measurements (e.g., measurements of RSSI, RTT, RSRP, RSRQ, AoA, or ToA) for signals transmitted by UE 105, and/or may receive measurements obtained by UE 105 or by an AP in WLAN 216 in the case of N3IWF 250, and may send the measurements to a location server (e.g., LMF 220) for computation of a location estimate for UE 105.

Positioning of the UE 105 also may be categorized as UL, DL, or DL-UL based, depending on the types of signals used for positioning. If, for example, positioning is based solely on signals received at the UE 105 (e.g., from a base station or other UE), the positioning may be categorized as DL based. On the other hand, if positioning is based solely on signals transmitted by the UE 105 (which may be received by a base station or other UE, for example), the positioning may be categorized as UL based. Positioning that is DL-UL based includes positioning, such as RTT-based positioning, that is based on signals that are both transmitted and received by the UE 105.

Depending on the type of positioning (e.g., UL, DL, or DL-UL based) the types of reference signals used can vary. For DL-based positioning, for example, these signals may comprise PRS (e.g., DL-PRS transmitted by base stations or SL-PRS transmitted by other UEs), which can be used for OTDOA, AOD, and RTT measurements. Other reference signals that can be used for positioning (UL, DL, or DL-UL) may include Sounding Reference Signal (SRS), Channel State Information Reference Signal (CSI-RS), synchronization signals (e.g., synchronization signal block (SSB) Synchronizations Signal (SS)), Physical Uplink Control Channel (PUCCH), Physical Uplink Shared Channel (PUSCH), Physical Sidelink Shared Channel (PSSCH), Demodulation Reference Signal (DMRS), etc. Moreover, reference signals may be transmitted in a Tx beam and/or received in an Rx beam (e.g., using beamforming techniques), which may impact angular measurements, such as AOD and/or AOA.

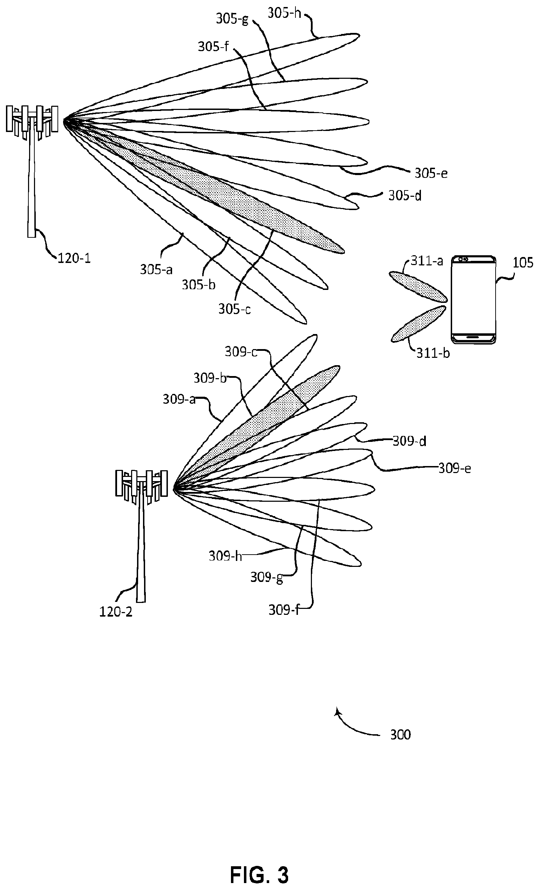

FIG. 3 is a diagram illustrating a simplified environment 300 including two base stations 120-1 and 120-2 (which may correspond to base stations 120 of FIG. 1 and/or gNBs 210 and/or ng-eNB 214 of FIG. 2) producing directional beams for transmitting RF reference signals, and a UE 105. Each of the directional beams is rotated, e.g., through 120 or 360 degrees, for each beam sweep, which may be periodically repeated. Each direction beam can include an RF reference signal (e.g., a PRS resource), where base station 120-1 produces a set of RF reference signals that includes Tx beams 305-a, 305-b, 305-c, 305-d, 305-e, 305-f, 305-g, and 305-h, and the base station 120-2 produces a set of RF reference signals that includes Tx beams 309-a, 309-b, 309-c, 309-d, 309-e, 309-f, 309-g, and 309-h. Because UE 105 may also include an antenna array, it can receive RF reference signals transmitted by base stations 120-1 and 120-2 using beamforming to form respective receive beams (Rx beams) 311-a and 311-b. Beamforming in this manner (by base stations 120 and optionally by UEs 105) can be used to make communications more efficient. They can also be used for other purposes, including taking AoD and AoA measurements for position determination.

Network-based positioning of a UE may often require the UE to communicate with a plurality of base stations. In RTT-based positioning, for example RTT measurements can involve transmitting and receiving wireless reference signals with multiple base stations, and further reporting Rx-Tx time difference measurements to a serving base station. With some types of UEs, such as mobile phones, the power requirements of RTT-based positioning may not be an issue. However, with "light" UEs, which typically have a much tighter power budget, these types of communications can be problematic.

As used herein, the term "light" or "low-tier" UE or device refers to a wireless device having a relatively low operating bandwidth, as compared with a "premium" UE or device, which has a relatively high operating bandwidth. Light UEs may also be called "reduced-capability" UEs. For reduced-capability devices in 5G NR, 3GPP is developing "NR Light" standards that allow for NR devices with reduced complexity and energy consumption to meet the higher latency and data rate acquirements in a 5G NR environment (as compared with narrowband IoT (NB-IoT) or LTE-M in and LTE environment). As such, references to light or low tier UEs or devices herein may refer to 5G NR devices using NR Light, and references to premium UEs or devices herein may refer to 5G NR devices using standard NR. Examples of light UEs can include wearable devices (e.g., smart watches), relaxed/narrowband IoT devices, low-end mobile phones, and the like. The current operating bandwidth of these devices is roughly 5-20 megahertz (MHz), although some low-tier UEs may have a higher or lower operating bandwidth. Examples of premium UEs may comprise high-end mobile phones (e.g., smart phones), tablets, vehicles, and the like. Premium UEs currently operate at a bandwidth of 100 MHz or more. Generally speaking, light UEs have a relatively lower bandwidth (e.g., less than 100 MHz), lower processing capabilities, and/or lower power budgets than premium UEs.

As noted, network-based positioning often requires communication with multiple base stations. For example, high-accuracy positioning determinations (e.g. with an accuracy of 3 m or less) often require multi-RTT, in which RTT measurements are made between a UE and multiple base stations. However, the power requirements of communicating with multiple base stations can often be burdensome to light UEs. Moreover, light UEs may be incapable of obtaining reference signals (e.g., PRS) from multiple base stations due to antenna loss, low bandwidth, fewer antennas, and reduced baseband capabilities, compared with premium UEs. Additionally, light UEs have a reduced transmit power, which can result in a lower quality uplink (UL) measurement at the base station of an RF signal transmitted by a light UE.

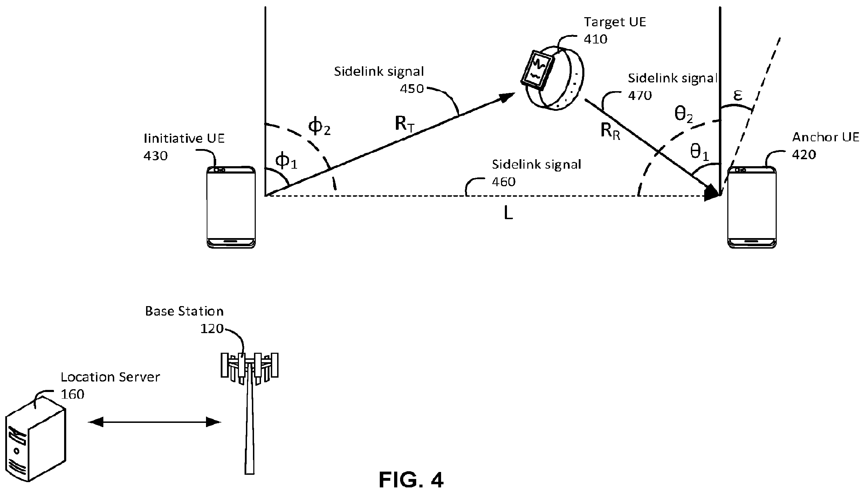

With this in mind, low-power positioning techniques have been developed to enable the determination of a target UE (e.g., a light UE) with high accuracy using a single base station and using relatively low power used by the target UE. This may be accomplished by leveraging an anchor UE 420 (e.g., a premium UE), which also may be referred to as a "relay," having a known location relative to the base station. However, in some circumstances, one or more of the UEs (e.g., light UE, premium UE, or both the light UE and the premium UE) may be out of range of any base station. Techniques can be used for UE-assisted and UE-based positioning that does not rely on connectivity with a base station in the network. FIG. 4 helps illustrate such low-power, out-of-coverage UE positioning can occur.

FIG. 4 is a simplified diagram illustrating how position determination of a target UE 410 may be made using an anchor UE 420 and an initiative UE 430, according to an embodiment. This is an example of determining the position of a first mobile device (e.g., anchor UE 410) based on a differential angle-of-arrival (AoA) measured at a second mobile device (e.g., anchor UE 420) between wireless reference signals received from the first mobile device and a third mobile device (e.g., initiative UE 430).. In this embodiment, the anchor UE 420 and the initiative UE 430 are both premium UEs, and their positions are known. Here, positioning of the target UE 410 is accomplished using wireless reference signals sent between the target UE 410, the anchor UE 420, or relay, and the initiative UE 430.. These wireless reference signals may comprise sidelink signals (e.g., sidelink signals 450, 460, and 470). The coordination of the transmission and measurements of sidelink signals 450, 460, and 470 may or may not be facilitated with the use of a location server 160.

The position of the target UE 410 can be determined mathematically by solving for the distance, $R_R$, of the target UE 410 from the anchor UE 420, as well as the differential AoA ($\theta_2 - \theta_1$). Solving for these two variables can be accomplished with the help of the anchor UE 420, which can measure a sidelink signal 460, as well as a sidelink signal 470 provided by the target UE 410 in response to the target UE 410 receiving sidelink signal 450.

The distance $R_R$ can be determined based on a time difference at the anchor UE 420 of receiving the sidelink signal 460 and sidelink signal 470. Where $R_{sum}$ is the combined distance of distance $R_R$ and the distance, $R_T$, between the target UE 410 and initiative UE 430, then solving for $R_R$ results in the following expression:

$$R_R = R_{sum} - R_T. \tag{1}$$

If $L$ is defined as the distance between the initiative UE 430 and anchor UE 420, then equation (1) can be modified as follows:

$$R_R = \frac{R_{sum}^2 - L^2}{2[R_{sum} + L*\sin(\theta_2 - \theta_1)]}. \tag{2}$$

Because the locations of the anchor UE 420 and initiative UE 430 are known (or can be determined beforehand), distance $L$ can be obtained based on a distance calculation between the known locations of the two UEs. Further, $R_{sum}$ may be determined from the timing of the transmission and receipt of sidelink signals 450, 460 and 470. In particular, $R_{sum}$ may be calculated as follows:

$$R_{sum} = \left[T_{Rx, SL2, relay} - T_{Rx, SL3, relay} - \left(T_{Tx, SL2, UE} - T_{Rx, SL1, UE}\right)\right] * c + L, \tag{3}$$

where $T_{Rx, SL2, relay}$ is the time of arrival (ToA) of the sidelink signal 470 at the anchor UE 420, $T_{Rx, SL3, relay}$ is the ToA of the sidelink signal 460 at the anchor UE 420, $T_{Tx, SL2, UE}$ is the time target UE 410 transmits the sidelink signal 470, $T_{Rx, SL1, UE}$ is the time the sidelink signal 450 is received at the target UE 410, and c is the speed of the RF signals (e.g., the speed of light). Anchor UE 420 can measure $T_{Rx, SL2, relay}$ - $T_{Rx, SL3, relay}$, which is also referred to as a Rx-Tx time difference measurement. The target UE 410 can measure $T_{Tx, SL2, UE}$ - $T_{Rx, SL1, UE}$, which is also referred to as a received time difference (RSTD) measurement, and provide this measurement to the anchor UE 420, for the anchor UE 420 to calculate the position of the target UE 410. Alternatively, the anchor UE 420 can forward the measurements made by both the target UE 410 and anchor UE 422 the location server 160 to calculate the location of the target UE 410.

Returning to equation (2), the final variable needed to determine the location of the target UE 410 is the differential AoA, ($\theta_2 - \theta_1$). Use of the differential AoA ($\theta_2 - \theta_1$) promotes low power consumption by the target UE 410. For example, the position of the target UE 410 can be determined using an absolute angle $\phi_1$, based on an angle-of-departure (AoD) measurement of the sidelink signal 450 transmitted by the initiative UE 430. However, an AoD measurement can result in an undesirable amount of power consumption by the target UE 410.

Briefly put, AoD can be measured when an initiative UE 430 uses beam sweeping to transmit reference signals in each of a plurality of directions, using a respective plurality of beams (e.g., as shown by beams 309-a through 309-f in FIG. 3, but implemented by transmission from a UE instead of a base station). By using RSRP measurements of each beam at the target UE 410, the beam most aligned with the UE 105 can be identified (as one having the highest value). Additional techniques may be performed to determine an accurate AoD based on the alignment. For UE-based positioning, information regarding each beam (e.g., beam width and boresight) may be provided to the target UE 410 to allow the UE to calculate AoD. Alternatively, for UE-assisted positioning, the target UE 410 may provide RSRP measurements to a location server 160, which can use the RSRP measurements and beam information to calculate the AoD. Because the UE 105 may measure a large number of beams to perform AoD measurements (beam sweeping can involve eight or 64 beams, for example), these AoD measurements can consume a relatively large amount of power. Moreover, communicating beam information regarding each of the beams to the target UE 410 may take a large amount of signaling overhead.

Embodiments herein address these and other concerns by providing for a differential AoA measurement, which can be used in the low-power positioning in FIG. 4. That is, rather than the target UE 410 making an AoD measurement or RSRP measurement for AoD estimation to determine angle $\phi_1$, the anchor UE 420 can make a differential AoA measurement to determine a differential angle ($\theta_2 - \theta_1$): the angle at the anchor UE 420 between the initiative UE 430 and target UE 410. (To be clear, a differential AoA measurement comprises making two AoA measurements and determining the difference. In the case of determining the differential angle ($\theta_2 - \theta_1$), the anchor UE 420 can make AoA measurements of the sidelink signal 470 and sidelink signal 460, to obtain angles $\theta_1$ and $\theta_2$, then take a difference.) The differential angle ($\theta_2 - \theta_1$) can then be used according to equation (2) to solve for distance $R_R$.

This can save a large amount of power at the target UE 410 because, rather than a large number of RSRP measurements (e.g., eight or 64 measurements corresponding to each beam of a beam sweep), the target UE 410 may only need to take a single measurement (e.g., a ToA (e.g., $T_{Rx, Uu, UE}$) the sidelink signal 450 arrives at the target UE 410). Moreover, the sidelink signal 450 may be transmitted by the initiative UE 430 using a wider beam. Further, because anchor UE 420 measures a differential AoA, a precise orientation of the anchor UE 420 when the measurement is made is not needed if signals 460 and 470 are received close in time. That is, where angle ε accounts for the anchor UE's orientation, it can be assumed to represent a common offset of measurements by the anchor UE 420 for both $\theta_1$ and $\theta_2$ (e.g., the anchor UE 420 measures $\theta_1 + ε$ and $\theta_2 + ε$) if there is a negligible amount of change in the anchor UE's orientation between the receipt of signals 460 and 470. As discussed in further detail below, embodiments may therefore ensure signals 460 and 470 are received close in time to help ensure a negligible change in the UE's orientation. Ensuring angle ε is common for both $\theta_1$ and $\theta_2$ then allows ε to be canceled out when calculating difference $\theta_2 - \theta_1$ (e.g., $(\theta_1 + ε) - (\theta_2 + ε)$) in equation (2).

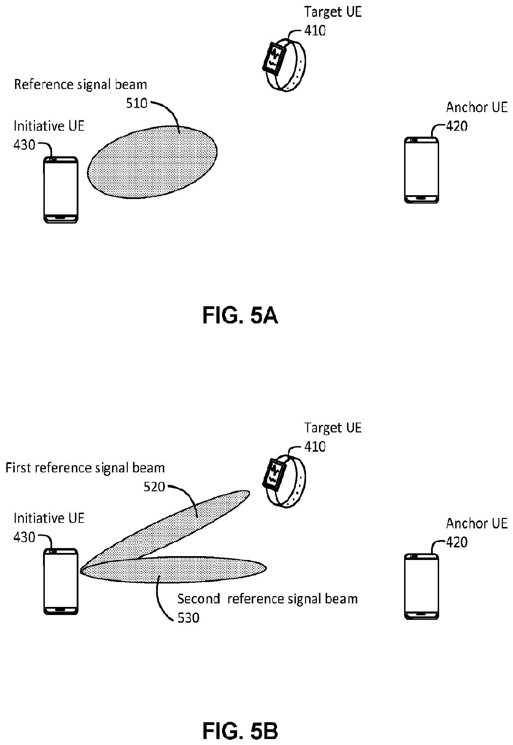

Furthermore, the technique illustrated in FIG. 4 only requires the low-power UE, e.g., target UE 410, to receive one wireless reference signal from the initiative UE 430 and send one wireless reference signal to the anchor UE 420, to generate the differential AoA ($\theta_2 - \theta_1$) and the estimated distance $R_R$, in determining the position of the target UE 410. Estimating the distance $R_R$ according to the present embodiment does not require the target UE 410 to both send a wireless reference signal to, and receive a wireless reference signal from, the anchor UE 420. By contrast, techniques such as RTT would require a round-trip measurement involving both the sending and receiving of reference signals between devices such as the target UE 410 and anchor UE 420. The technique illustrated in FIG. 4 thus provides significant power savings by minimizing the number of signal receptions and measurements by the target UE 410. It can further be noted that sidelink signal 450 and sidelink signal 460 may comprise the same or different reference signals. FIGS. 5A and 5B illustrate an example of this.

**FIGS. 5A and 5B** are diagrams of a target UE 410, anchor UE 420, and initiative UE 430 similar to those shown in FIG. 4, provided to illustrate how beams may be used differently in different embodiments and/or situations, depending on desired functionality. In FIG. 5A, for example, a single reference signal (e.g., sidelink signal) beam 510 is wide enough to be received by both target UE 410 and anchor UE 420, allowing it to be used in the previously-described position determination of the target UE 410. As can be seen, whether the reference signal beam 510 is sufficiently wide may depend not only on the width of the reference signal beam, but also how close the target UE 410 and the anchor UE 420 are to each other. (In some instances, for example, the target UE 410 and anchor UE 420 may be sufficiently close such that a relatively narrow beam - as illustrated in FIG. 5B, for example - may be used by both the target UE 410 and anchor UE 420.) In FIG. 5B, however, the target UE 410 is aligned with a first reference signal beam 510, and an anchor UE 420 is more aligned with a second reference signal beam 530. In such instances, even if the anchor UE 420 is capable of detecting both first reference signal beam 520 and a second reference signal beam 530, it may be preferable for the anchor UE 420 to take a ToA measurement of the second reference signal beam 530, rather than the first reference signal beam 520 (e.g., due to more favorable SNR values to take a ToA measurement). Although reference signal beams 520, 530 may be transmitted at different times, because the time difference in the transmission of first reference signal beam 520 and the second reference signal beam 530 is known, this time difference can be accounted for in equation (3), allowing for the determination of $R_R$ in cases where different reference signal beams transmitted at different times are used.

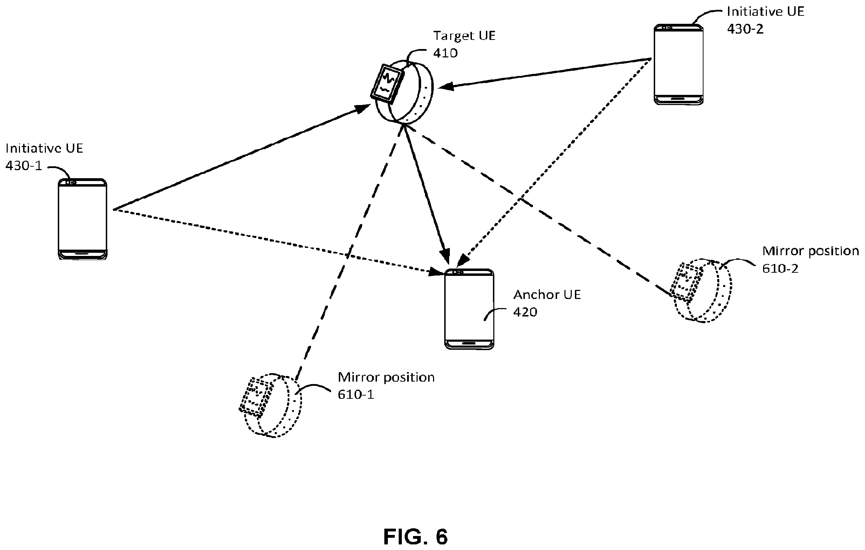

It can be noted that, in the case of using a single initiative UE 430 for positioning, a differential AoA measurement may result in ambiguity because it is not an absolute measurement. When solving for a two-dimensional location of the target UE 410, for example, there may be two possible locations for the target UE 410 (e.g., on a horizontal plane). An example of such ambiguity as illustrated in FIG. 6.

**FIG. 6** is a diagram similar to FIG. 4, illustrating a simple configuration that may be used by a positioning system for determining a position of a target UE 410. (For simplicity, the location server 160 and other components are not illustrated.) Using the techniques described above, the anchor UE 420 can take ToA measurements and a differential AoA measurement of reference signals transmitted by a first initiative UE 430-1 and the target UE 410 to solve the variables in equations (3) and (4) above to determine a location of the target UE 410. However, with no other data, the two-dimensional solution results in two possible locations: the actual location of the target UE 410 and a mirror position 610-1. Embodiments can resolve this ambiguity in any of a variety of ways.

According to some embodiments, for example, a second initiative UE 430-2 can be used to resolve the ambiguity. In such embodiments, the second initiative UE 430-2 and target UE 410 can transmit reference signals with which the anchor UE 420 can take ToA measurements and a differential AoA measurement. This again results in two possible solutions for the two-dimensional location of the target UE 410: the actual location as well as a mirror position 610-2. Using the common solution of the location of the target UE 410 based on reference signals from both initiative UEs 430-1 and 430-2, the ambiguity can be resolved, and the actual location of the target UE 410 may be determined.

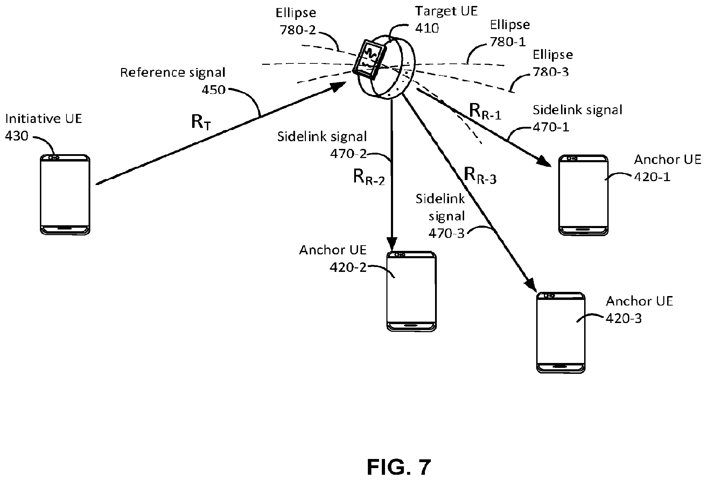

Although additional initiative UEs can be used to resolve the ambiguity, other techniques may be used, depending on desired functionality, available data, and/or other factors. For example, according to some embodiments, tracking data, historical location data, etc. may be used to resolve the ambiguity. Additionally or alternatively, location data from additional anchor UEs may be leveraged (e.g., utilizing one or more additional anchor UEs in the manner detailed above, and solving for common solution), as shown in more detail in FIG. 7, discussed hereafter. Data from other positioning techniques, such as GNSS-based positioning, sensor/image-based positioning, etc. additionally or alternatively may be used to resolve ambiguity. Such data may come from the target UE 410, which may provide the information to the anchor UE 420 and/or location server 160, whichever determines the position of the target UE.

**FIG. 7** is a simplified diagram illustrating a scenario in which location data from additional anchor UEs may be leveraged to resolve ambiguity, according to embodiments. Here, rather than a single anchor UE 420, multiple anchor UEs 420-1, 420-2, and 420-3 (collectively and generically referred to herein simply as anchor UEs 420) are used. Such a technique is an example of a method for determining the position of a first mobile device (e.g., target UE 410) by obtaining a range sum (e.g., $R_{sum}$). Here, the range sum comprises (a) a first range (e.g., $R_R$) between the first mobile device and a second mobile device (e.g., one of the anchor UEs 420) and (b) a second range (e.g., $R_T$) between the first mobile device and a third mobile device (e.g., initiative UE 430).

The process of determining the location of the target UE 410 may be generally similar to the process illustrated in FIG. 4 and described herein. However, because multiple anchor UEs 420 are used, angle information may not be needed. Rather than (or in addition to) determining the position of the target UE 410 using distance $R_R$ and angle information such as differential AoA, the position may be determined instead using multilateration. For example, the target UE 410 may receive a sidelink signal 450 from the initiative UE 430, and each anchor UE 420 can receive a respective sidelink signal 470 from the target UE 410, as well as a direct reference signal from an initiative UEs 430 (similar to reference signal 460 and FIG. 4), to determine a respective $R_{sum}$ using equation (3). (To reduce clutter, direct reference signals are not illustrated in FIG. 7.) Because $R_{sum}$ is the sum of $R_T$ and the respective $R_R$ for each anchor UE 420, the value of $R_{sum}$ can be used to form a respective ellipse 780 for each anchor UE 420 in which the anchor UE 420 and initiative UE 430 are foci of the respective ellipse. (Again, to reduce clutter, only applicable portions of ellipses 780 are illustrated in FIG. 7.) A plurality of range sums can be obtained in such a manner. Each range sum in the plurality of range sums corresponds to a unique ellipse 780-n having a pair of foci corresponding to known positions of a unique pair of the second mobile device (e.g., anchor UE 420) and the third mobile device (e.g., initiative UE 430).

Resolving ambiguity in the location of the target UE 410 may therefore comprise determining a point at which the ellipses 780 converge. This technique may be used in addition or as an alternative to other ambiguity resolution techniques. Multiple ellipses may also be formed by utilizing additional initiative UEs 430. Unique pairs of foci (and associated ellipses) may be formed, for example, by pairing one anchor UE 420 with different initiative UEs 430, pairing one initiative UE 430 with different anchor UEs 420, pairing different anchor UEs 420 with different initiative UEs 430, etc. The number of anchor UE(s) 420 and initiative UE(s) 430 used to resolve ambiguity in the position of the target UE 410 in this manner may vary, depending on the situation. A larger or smaller number of anchor UEs 420 than illustrated in FIG. 7, for example, and/or one or more initiative UEs 430 can be used.

It can be noted that reference signals (e.g., sidelink signals) may be the same or different, depending on desired functionality. For example, a single sidelink signal 450 may be sent to the target UE 410, which may then send respective sidelink signals 472 each of the anchor UEs 420. In another example, the target UE 410 may receive a single sidelink signal 450 and send a single sidelink signal 470 to all or a subset anchor UEs 420. Alternatively, a different sidelink signal 450 may be used for each anchor UE 420 such that, for each anchor UE, the target UE 410 receives a respective sidelink signal 450 and sends a corresponding respective sidelink signal 470 to the anchor UE. Different embodiments may employ different combinations of reference signals. Similarly, one or more sidelink signals from the initiative UE 430 to the anchor UEs 420 (not illustrated in FIG. 7, but corresponding to sidelink signal 460 in FIG. 4) may be used. (E.g., if all anchor UEs 420 are within a single beam, a single sidelink signal may be used. Alternatively, different sidelink signals may be sent to different anchor UEs 420.)

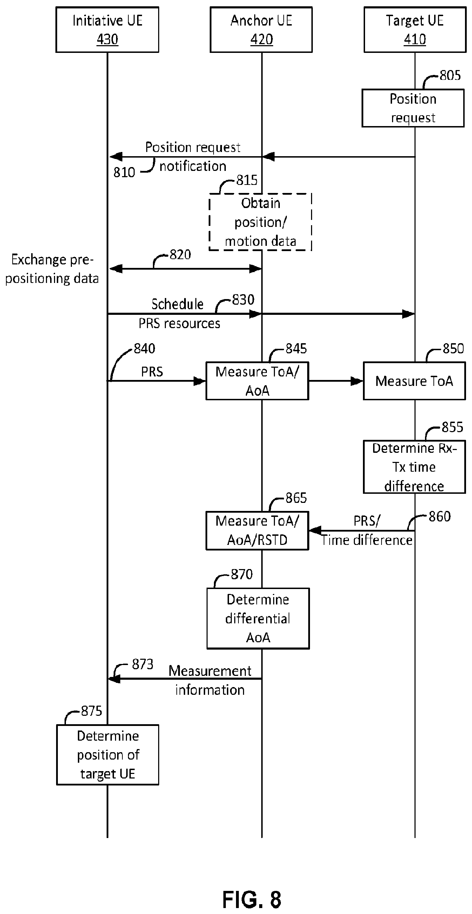

The determination of the position of the target UE 410 and/or values distance $R_R$ and differential AoA angle $\theta_2 - \theta_1$ may be performed by different entities, depending on desired functionality. This may depend, for example, on whether the position of the target UE 410 is UE-based (e.g., where the request for the position of the target UE 410 comes from the target UE 410 itself) or whether it is UE-assisted (e.g., where the request for the position of the target UE 410 comes from the network or other entity outside the target UE, such as the external client 180 of FIG. 1 or external client 230 of FIG. 2). Accordingly, different processes can be used to determine the position of the target UE 410. Additional details are provided hereafter with regard to FIGS. 8-10 illustrate some example processes.

**FIG. 8** is a call-flow diagram illustrating an embodiment of a process of performing UE-based position determination of a target UE 410. As with the other figures provided herein, FIG. 8 is provided as a nonlimiting example. Further, alternative embodiments may perform certain functions (e.g., the exchange of pre-positioning data, the ToA measurements, etc.) in a different order, simultaneously, etc. It can be noted that arrows between the various components illustrated in FIG. 8 illustrate messages or information sent from one component to another. It will be understood, however, that there may be any number of intervening devices, servers, etc. that may relay such messages, including other components in FIG. 8. Additionally, although wireless reference signals are referred to as PRS (e.g., sidelink PRS signals transmitted by the initiative UE 430 and target UE 410), alternative embodiments may utilize other wireless reference signal types.

At block 805, the target UE 410 obtains a position request. This position request may come, for example, from an application (or app) executed by the target UE 410. This may be a result from user interaction with the target UE 410, based on a determined schedule, or based on other triggers. Additionally or alternatively, a position request may come from a separate device (e.g., the anchor UE 420 or another device in communication with the target UE 410) requesting the position of the target UE 410.

In response, the target UE 410 may generate a position request notification. As indicated at arrow 810, the request can be sent to the location server. The location server may reside in any of the UEs present, including the target UE 410, the anchor UE 420, or the initiative UE 430. In this particular example, the location server resides in the initiative UE 430. The location server can coordinate the functionality of the various components illustrated in FIG. 8 to determine of the position of the target UE 410. According to some embodiments, additional communications between the target UE 410 and location server may occur to determine capabilities of the target UE 410 (including, for example, the capability of the target UE 410 to communicate with the anchor UE 420). In some embodiments, communication between the location server and target UE 410 may occur via an LPP positioning session.

As illustrated, according to some embodiments the position request notification may additionally be sent to the anchor UE 420. This can notify the anchor UE 420 of the position request received by the target UE 410 (at block 805) and optionally (as indicated by the dashed box) trigger the anchor UE 420 to obtain its position, at block 815. Here, too, the position request notification provided to the anchor UE 420 may be part of a larger communication exchange in which positioning capabilities are shared between the target UE 410 and anchor UE 420. According to some embodiments, location between the target UE 410 and anchor UE 420 may occur over an existing sidelink connection. Alternatively, a new sidelink connection may be created in response to the position request received at block 805. According to some embodiments, rather than the target UE 410 providing the position request notification at arrow 810, the notification may be provided by the location server, in response to the location server's receipt of the position request notification at arrow 810.

The selection of an anchor UE 420 to use in the position determination of the target UE 410 may be made in any of a variety of ways, depending on desired functionality. For example, as noted, the target UE 410 may have an existing sidelink communication channel with an anchor UE 420 that can be leveraged for positioning purposes. In such instances, the anchor UE 420 may be selected based on an existing sidelink channel. Additionally or alternatively, the anchor UE 420 may be selected by the target UE 410 based on a scan of nearby anchor UEs as well as a confirmed capability of performing positioning and this manner. Some embodiments may use a signal quality metric such as SNR and/or RSSI, for example, to select of the anchor UE 420. Signal quality measures can be used to select an anchor UE 420 that has adequate signal quality to perform the functions described herein, while not being too close to the target UE 410 to result in positioning errors for the position determination of the target UE 410. Accordingly, in such embodiments, a certain range of SNR and/or RSSI values may be selected to balance these considerations, and anchor UEs having SNR and/or RSSI values that fall within this range may be selected over other anchor UEs having SNR and/or RSSI values falling outside this range. Other embodiments may utilize additional or alternative techniques for anchor UE selection.

As noted, at block 815, the anchor UE 420 may optionally determine its position and/or motion data. As noted above a position of the anchor UE 420 can be used in determining the position of the target UE 410. Obtaining position data can be performed in any of a variety of ways, including GNSS, dead reckoning, and/or other non-network means. Additionally or alternatively, position determination for the anchor UE 420 can be network-based and may involve a separate location server 160 (not shown). In some embodiments, the anchor UE 420 may obtain a high-accuracy position determination based on, for example, multi-RTT positioning based on communication with a plurality of base stations (which may include communication with the base station 120). For multi-RTT positioning, assistance data may include a location of each base station with which RTT measurements are made.

Motion data can be used to determine a time window for the PRS signals to be transmitted in may be determined in any of a variety of ways. The anchor UE 420 may include motion sensors, for example, that can be used to determine a motion in which the anchor UE 420 is engaged.

As indicated at arrow 820, the location server 160 and anchor UE 420 can exchange pre-positioning data in preparation for determining the position for target UE 410. This can include, for example, the anchor UE 420 providing the location server information regarding the capabilities of the anchor UE 420 for performing AoA measurements. That is, the anchor UE 420 can provide the location server with a capability report to indicate whether the anchor UE 420 is capable of performing a differential AoA measurement.

It can be noted that the capabilities of the anchor UE 420 in this regard may vary, depending on device type and other factors. As previously indicated, the taking a differential AoA measurement can be simpler for an anchor UE 420 to perform than taking an absolute AoA measurement. This is because an absolute AoA measurement may require real-time antenna orientation calibration for the anchor UE 420. On the other hand, a differential AoA measurement is based on the difference between first and second AoA measurements, rather than an absolute orientation of either one. Accordingly, some devices may be capable of taking only differential AoA measurements rather than absolute AoA measurements. Other devices (e.g., such as devices having only a single antenna) may not be capable of taking either differential or absolute AoA measurements.

It can be further noted that a device's capabilities with regard to taking differential AoA measurements may be dynamic. To help ensure an accurate differential AoA measurement, and anchor UE 420 should undergo little or no movement between taking first and second AoA measurements. Thus, according to some embodiments, the pre-positioning data provided at arrow 820 may further include motion data (e.g., an indication of current or anticipated motion, a motion state, etc.) that could impact the accuracy of a differential AoA measurement. This motion data may comprise the motion data obtained at block 815. The location server can then take this motion information into account when and coordinating the transmission of PRS resources for the position determination of the target UE 410. Faster movement (e.g., changes in the location and/or orientation of the anchor UE 420) may result in a less-accurate differential AoA measurement.

For its part, the location server can help minimize any negative effects that motion may have on a differential AoA measurement taken by the anchor UE 420 by ensuring time-domain proximity of positioning reference signals. In other words, if the location server 160 is able to schedule the transmission of the PRS by the initiative UE 430 and the PRS by the target UE 410 within a time-domain proximity, motion by the anchor UE 420 may have little impact the accuracy of the differential AoA measurement. The time window in which these reference signals are scheduled may depend not only on any motion of the anchor UE 420, but also accuracy requirements of the position request at block 805. Thus, the location server 160 can balance the effects of any anchor UE motion with accuracy requirements when scheduling the transmission of the positioning reference signals. According to some embodiments, time-domain proximity of reference signals could be quantized based on the motion status of the anchor UE 420. According to some embodiments, a lookup table may be used to map different types of motion, velocity, rotation speed, etc. to different time-domain proximity requirements. If the anchor UE's motion is static or its orientation is fixed, the requirement could be relaxed.

Depending on desired functionality, the time-domain proximity of first and second reference signals for differential AoA measurements may be defined using different levels of granularity. For example, embodiments may define a time window for the measurements in terms of frames, subframes, slots, symbols, or other features (including sub-symbol features/times) of an Orthogonal Frequency-Division Multiplexing (OFDM) regime utilized in NR or LTE communication. Because these features can occur on a scale of microseconds, reference signals used within a time window described in these terms can help ensure minimal movement occurs between first and second AoA measurements.

Because there may be a time delay between the exchange of pre-positioning data at arrow 820 and the transmission/measurement of PRS resources on the order of milliseconds or seconds (or more), there may be changes in the motion of the anchor UE 420. That is, any motion reported in the pre-positioning data at arrow 820 may not precisely match the motion of the anchor UE 420 at the time of the AoA measurements of DL-PRS and SL-PRS for the differential AoA measurement. With this in mind, some embodiments may further provide for post-hoc reporting of motion/motion status of the anchor UE 420. Just as the motion of the anchor UE 420 reported in the pre-positioning data may be used to determine a time window for making the differential AoA measurement, post-hoc motion data regarding motion of the anchor UE 420 during the differential AoA measurement can be used to determine an accuracy of the differential AoA.

According to some embodiments, a location server may schedule PRS resources (e.g., PRS 840 and PRS 860) with a default time-domain proximity. That is, if the anchor UE 420 is unable to provide a motion/motion status, or (in some cases) regardless of the type of motion/motion status provided by the anchor UE, location server 160 can schedule the PRS resources to have a sufficient time-domain proximity (e.g., on the order of 20 ms, 11 ms, 5 ms, or less) to help ensure minimal movement during the differential AoA measurement.

At arrow 830, the location server 160 schedules the transmission and measurements of PRS resources. This can include providing a configuration to the base station 120 for transmitting a DL-PRS, providing a configuration to the target UE 410 for transmitting PRS 860, and/or providing a configuration to the target UE 420 for measuring PRS 840 and PRS 860. It can be noted, however, that alternative embodiments may allow the anchor UE 420 or another UE (not shown) to schedule the transmission of the SL-PRS by the target UE 410. For example, in some embodiments, the anchor UE 420 may configure the Resource Pool for Positioning (RP-P) of the target UE 410. This may include configuring the target UE 410 with specific SL-PRS resources (subset of symbols, bandwidth, comb-size, sequence ID, number of ports) within the configured RP-P. According to some embodiments, the location server may configure the anchor UE 420 by indicating when the initiative UE 430 is scheduled to transmit a PRS, and the anchor UE 420 can then configure the target UE 410 with one or more PRS resources in view of the time-domain proximity considerations previously described.

Next, the initiative UE 430 transmits PRS 840. As indicated in FIGS. 5A and 5B, the PRS transmitted to the anchor UE 420 (e.g., reference signal 460 of FIG. 4) may be the same or different than the PRS transmitted to the target UE 410 (e.g., reference signal 450). In either case, the anchor UE 420 takes ToA and AoA measurements of PRS 840 at block 845, and the target UE 410 takes ToA measurements of PRS 840 at block 850. As previously noted, ToA measurements can be used in the positioning of the target UE 410, for example, to solve the equation (3) above. The AoA measurement of PRS 840 by the anchor UE 420 at block 845 can be part of the differential AoA measurement taken by the anchor UE 420, which is later used to solve the equation (2) above. Although some embodiments may use separate PRS signals for ToA and AoA measurements by the anchor UE 420, other embodiments may choose to take both types of measurements of the same PRS signal to help increase signaling efficiency.

After measuring the PRS 840 ToA at block 850, the target UE 410 can then determine an Rx-Tx time difference (e.g., time difference $T_{Tx, SL, UE}$ - $T_{Rx, Uu, UE}$ of equation (3)), as shown at block 855. In particular, the Rx-Tx time difference is the time difference between a time the DL-PRS is received at the target UE 410 and a time the target UE 410 transmits PRS 860 to be received by the anchor UE 420. Further, the target UE 410 then sends the PRS 860 to the anchor UE 420, along with the Rx-Tx time difference. As previously described, PRS 860 may comprise a signal (e.g., sidelink signal 470) sent via a sidelink communication channel.

At block 865, the anchor UE 420 measures the ToA and AoA of -PRS 860, which can be used to solve for the location of the target UE 410, for example, using equations (2) and (3). This can include, for example, the functionality at block 870, where the anchor UE 420 determines the differential AoA between PRS 860 received from the target UE 410 and PRS 840 received from the initiative UE 430.

Additionally, as indicated at block 865, the anchor UE 420 can further take a received time difference (RSTD) measurement between the signals PRS 860 and PRS 840 as they are received at the anchor UE 420. The RSTD measurement can be used, for example, to indicate the measurement quality of differential AoA determined at block 870. According to some embodiments, this may be used in conjunction with movement data taken by the anchor UE 410 during the time period between the receipt of PRS 840 and the receipt of PRS 860. A high amount of movement and/or a large RSTD measurement may result in an inaccurate differential AoA determination. According to some embodiments, this measurement quality indication can be reflected in a position determination of the target UE (e.g., as a decreased level of accuracy in the determined position). Additionally or alternatively, if movement and/or an RSTD measurement exceeds a threshold (e.g., potentially exceeding a threshold tolerance of inaccuracy for the position determination of the target UE 410), the anchor UE 420 may abort the process of determining the position of the target UE 410 altogether.

At block 875, the anchor UE 420 determines the position of the target UE 410. More specifically, using the differential AoA determined at block 870, a time difference in ToA measurements taken at block 845 and 865, and an Rx-TX time difference obtained from the target UE 410 the anchor UE 420 can determine the relative position of the target UE 410 from the anchor UE 420 using equations (2) and (3). Further, using a known position of the anchor UE 420 (which may have been obtained at block 815) the anchor UE 420 can determine the absolute position of the target UE 410. This determined position can then be sent to the target UE 410, as indicated by arrow 880.

As previously noted, PRS 840 may be measured by both anchor UE 420 and target UE 410. In such instances, as illustrated in FIG. 8, PRS 860 is subsequently transmitted by the target UE 410. However, there may be some instances or embodiments in which PRS 840 and PRS 860 are measured by the anchor UE 420 at effectively the same time. This can be done to essentially reduce the time-domain proximity of these signals down to zero. For example, in instances in which the anchor UE 420 is undergoing a large amount of motion or incapable of providing motion data to the location server for determination of time-domain proximity of the signals, the location server can schedule PRS 840 and PRS 860 at effectively the same time (e.g., using the same symbols in OFDM communications). In such instances, the anchor UE 420 therefore may be capable of concurrently processing PRS 840 and PRS 860. This capability of the anchor UE 420 can be provided to the location server as part of the pre-positioning data exchanged at arrow 820, for example.

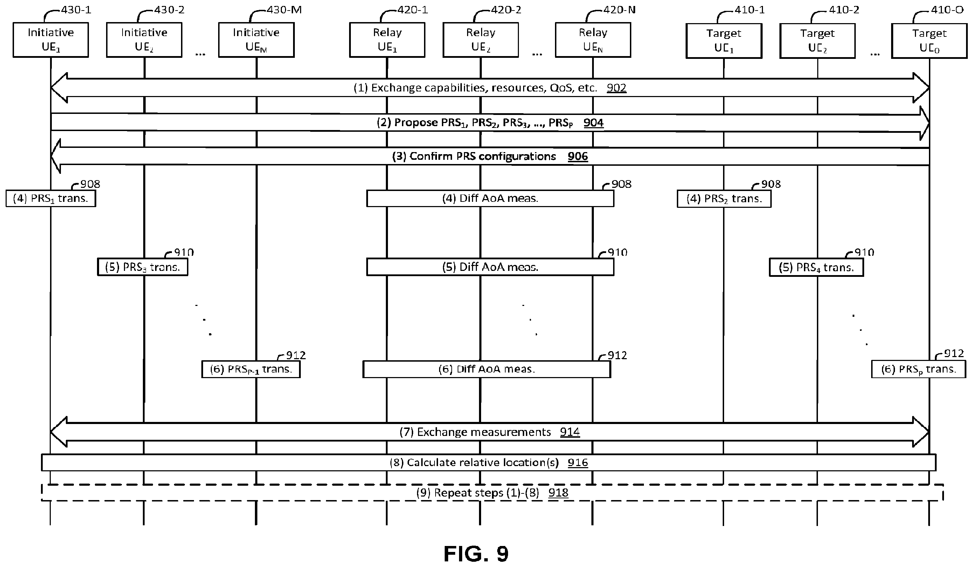

**FIG. 9** illustrates a coordinated schedule for transmission and measurement of wireless reference signals to support use of differential AoA in position determination of a target UE, according to some embodiments. Many of the operations performed in the process shown in FIG. 9 may be similar to the operations performed in the process of FIG. 8, as previously described. However, for ease of illustrations, many operations such as obtaining and sending a position request and/or position request notification, obtaining and exchanging pre-positioning or motion data, etc. are not shown but may be optionally included.

The coordinated schedule establishes a defined collection of reference signal transmissions and signal measurements to be performed by members of the group of UEs. As discussed, the determining the position of a UE may require and/or be enhanced by multiple signal transmissions and measurements involving different UEs, which can be streamlined by a coordinated schedule. Also, position determination calculations for different UEs may "reuse" some of the same reference signal transmissions and measurements. By coordinating the reference signal transmissions and measurements, redundant reference signal transmissions and measurements can be eliminated, and UE position determination among a group of UEs can be made more efficient.

As shown, the coordinated schedule involves a group of mobile devices, including various initiative UEs, relay UEs, and target UEs. The number of UEs serving each role may differ. For example, there may be M initiative UEs, including initiative UE$_1$ (430-1), initiative UE$_2$ (430-2), ... , initiative UE$_M$ (430-M). There may be N relay UEs, including relay UE$_1$ (420-1), relay UE$_2$ (420-2), ... , relay UE$_N$ (420-N). There may be O (letter "O") target UEs, including target UE$_1$ (410-1), target UE$_2$ (410-2), ... , target UE$_O$ (410-O). For easy of illustration, FIG. 9 labels each UE as serving a particular role (e.g., initiative UE, relay UE, and target UE). However, a UE is not fixedly assigned to a particular role. For example, a particular UE may serve as an initiative UE in one exchange of reference signals but serve as a relay UE, or target UE, in another exchange of reference signals, in accordance with the coordinated schedule.

In a first step 902, the group of UEs may exchange parameters such as capabilities, resources, Quality of Service (QoS). Communications shown in the figure, including the exchange of parameters at step 902, as well as confirmation of PRS configurations, exchange of measurements, etc., performed at other steps, may be carried out among the UEs using one or more sidelink messages.

In a second step 904, one of the UEs in the group may propose a coordinated schedule for transmission and measurement of reference signals. The coordinated schedule may specify a particular collection of wireless reference signals to be transmitted. For example, there may be P wireless reference signals proposed, including signals $PRS_1$, $PRS_2$, $PRS_3$, ... , $PRS_P$. For each reference signal, the proposal may specify which UE is to transmit the reference signal, when the reference signal is to be transmitted, as well as other transmit parameters. For each reference signal, the coordinated schedule may also specify which UE is to measure the reference signal, when the measurement should be taken, what type of measurement should be taken (e.g., AoA measurement, ToA measurement, etc.), as well as other receive parameters. The coordinated schedule may also specify measurements for pairs of reference signals, such as differential AoA measurements, Rx-Tx time difference measurements (e.g., time difference $T_{Rx, SL2, relay} - T_{Rx, SL3, relay}$ of equation (3)), and RSTD measurements (e.g., time difference $T_{Tx, SL2, UE} - T_{Rx, SL1, UE}$ of equation (3)), when such measurements are to be made, and by which UE(s). The role of each UE, as an initiative UE, relay UE, or target UE, may be assigned as part of the coordinated schedule.

In a third step 906, other UEs in the group of UEs may confirm the proposed coordinated schedule. The confirmation establishes the membership of each UE in the group and indicates that each member has agreed to perform the PRS transmission and measurement tasks specified in the coordinated schedule. Thereafter, a number of steps may follow that carry out the PRS transmissions and measurements specified in the coordinated schedule.

For example, the figure shows a fourth step 908, in which UE 430-1 (serving as the initiative UE) transmits the signal $PRS_1$, UE 410-1 (serving as the target UE) transmits the signal $PRS_2$, and each of one or more of the UEs 420-1, 420-2, ... , 420-N (serving as relay UEs) receives both signals $PRS_1$ and $PRS_2$ and performs a differential AoA measurement based on the difference in AoA between the two PRS signals. In this manner, in a single step, multiple differential AoA measurements can be completed, by simply specifying more than one UE as the relay UE.

A fifth step 910 operates in a similar way. In step 910, another pair of UEs, i.e., UE 430-2 (serving as the initiative UE) and UE 410-2 (serving as the target UE) transmit another pair of PRS signals, i.e., $PRS_3$ and $PRS_4$, Each of one or more of the UEs 420-1, 420-2, ... , 420-N (serving as relay UEs) receives both signals $PRS_3$ and $PRS_4$ and performs a differential AoA measurement. Again, in a single step, multiple differential AoA measurements can be completed.

A sixth step 912 operates in a similar way and illustrates that there can be a number of such steps. Here, another pair of UEs, i.e., UE 430-M (serving as the initiative UE) and UE 410-0 (serving as the target UE) transmit another pair of PRS signals, i.e., $PRS_{P-1}$ and $PRS_P$, Each of one or more of the UEs 420-1, 420-2, ... , 420-N (serving as the relay UEs) receives both signals $PRS_{P-1}$ and $PRS_P$ and performs a differential AoA measurement. Again, in a single step, multiple differential AoA measurements can be completed. While not shown explicitly in the figure, each of the steps 908 through 912 may also include timing measurements such as RSTD measurements and Rx-Tx time difference measurements, to further support differential AoA-based position determination for one or more target UEs.

In a seventh step 914, one or more of the group of UEs exchange measurements they have made locally. These measurements may include, for example, AoA, differential AoA, ToA, ToD, RSTD, Rx-Tx time difference, and/or other measurements. For example, each member UE may broadcast its measurements to all other member UEs of the group. Alternatively or additionally, each member UE may send its measurements to only the member UE(s) that need such measurements to complete particular position determination calculations.

In an eighth step 914, one or more of the group of UEs may use the measurements it has made locally and/or received from other member UEs to calculate relative position(s) for one or more target UEs, e.g., in accordance with equations (2) and (3). Because the measurements can be exchange among the group of UEs, calculation of the relative location of a target UE can be performed at the target UE or at other UEs, such as one or more other target UEs, one or more initiative UEs, and/or one or more relay UEs. The position determined for a target UE may comprise such a relative position. Alternatively or additionally, the position determined for the target UE may comprise an absolute position based on the relative position and known locations of the respective initiative UE and relay UE.

In a ninth step 918, the first eight steps 902 through 916 may be repeated, to continuously provide updated position determination values for one or more target UEs with each iteration of the coordinated schedule.

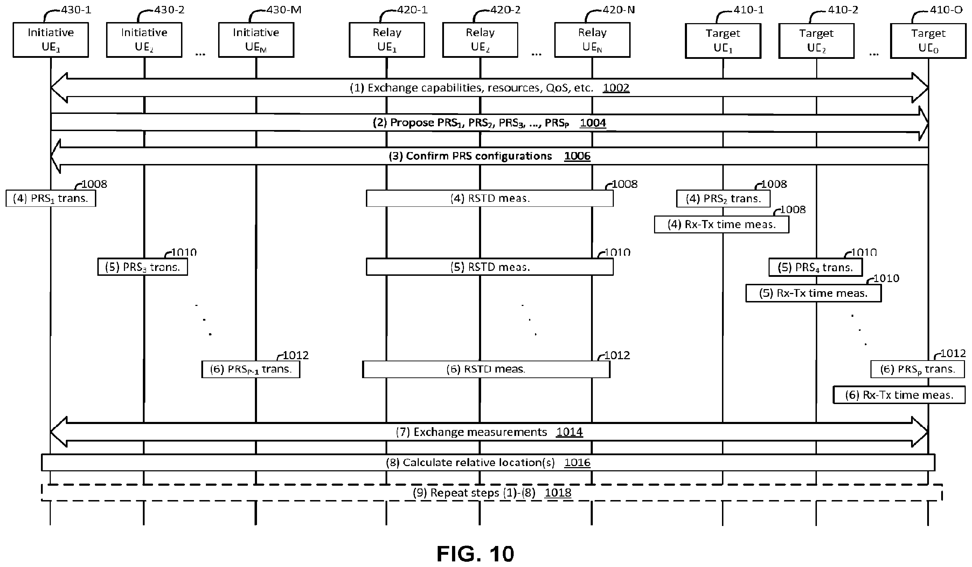

**FIG. 10** illustrates a coordinated schedule for transmission and measurement of wireless reference signals to support use of multilateration based on a plurality of range sums in position determination of a target UE, according to some embodiments. Each range sum may be calculated based on certain time difference measurements (e.g., according to equation (3)) and correspond to an ellipse, as discussed previously. The multilateration of multiple elliptical curves may yield an intersection point at which the positioned of a target device may be determined, such as discussed with reference to FIG. 7.

The first step 1002, second step 1004, and third step 1006 shown in FIG. 10) may be similar to the first, second, and third steps shown in FIG. 9. A coordinated schedule for transmission and measurement of reference signals is established for a group of mobile devices (e.g., UEs), including various initiative UEs, relay UEs, and target UEs. For example, there may be M initiative UEs, including initiative $UE_1$ (430-1), initiative $UE_2$ (430-2), ... , initiative $UE_M$ (430-M).

There may be N relay UEs, including relay $UE_1$ (420-1), relay $UE_2$ (420-2), ... , relay $UE_N$ (420-N). There may be O (letter "O") target UEs, including target $UE_1$ (410-1), target $UE_2$ (410-2), ... , target $UE_O$ (410-O). Again, while each UE is labeled as a serving a particular role (e.g., initiative UE, relay UE, and target UE), the role(s) of a UE in fact may be flexibly assigned according to the coordinated schedule. The first step 1002, involves the exchange of parameters such as the capabilities, resources, QoS, etc. among the group. In the second step 1004, one member of the group proposes the coordinated schedule, which may specify the transmission of P wireless reference signals, including signals $PRS_1$, $PRS_2$, $PRS_3$, ... , $PRS_P$. and measurement tasks associated with the reference signals. In the third step 1006, the other members of the group confirm the proposed coordinated schedule, as discussed. Once again, a number of steps may follow that carry out the PRS transmissions and measurements specified in the coordinated schedule.

For example, in a fourth step 1008, UE 430-1 (serving as the initiative UE) transmits the signal $PRS_1$, and UE 410-1 (serving as the target UE) transmits the signal $PRS_2$ and performs a Rx-Tx time difference measurement (e.g., time difference $T_{Tx, SL, UE} - T_{Rx, Uu, UE}$ of equation (3)). In the same step, each of one or more of the UEs 420-1, 420-2, ... , 420-N (serving as relay UEs) receives both signals $PRS_1$ and $PRS_2$ and performs an RSTD measurement (e.g., time difference $T_{Tx, SL2, UE} - T_{Rx, SL1, UE}$ of equation (3)). In this manner, in a single step, multiple RSTD measurements can be completed, by simply specifying more than one UE as the relay UE.

A fifth step 1010 operates in a similar way. In step 1010, another pair of UEs, i.e., UE 430-2 (serving as the initiative UE) and UE 410-2 (serving as the target UE) transmit another pair of PRS signals, i.e., $PRS_3$ and $PRS_4$, UE 410-2 may perform a Rx-Tx time difference measurement. Each of one or more of the UEs 420-1, 420-2, ... , 420-N (serving as relay UEs) receives both signals $PRS_3$ and $PRS_4$ and performs an RSTD measurement. Again, in a single step, multiple RSTD measurements can be completed. A sixth step 1012 operates in a similar way and illustrates that there can be a number of such steps. In a seventh step 1014, one or more of the group of UEs exchange measurements they have made locally. These measurements may include, for example, AoA, differential AoA, ToA, ToD, RSTD, Rx-Tx time difference, and/or other measurements. In an eighth step 1014, one or more of the group of UEs may use the measurements it has made locally and/or received from other member UEs to calculate relative position(s) for one or more target UEs, e.g., in accordance with equations (2) and (3). Alternatively or additionally, the position determined for the target UE may comprise an absolute position based on the relative position and known locations of the respective initiative UE and relay UE. In a ninth step 1018, the first eight steps 1002 through 1016 may be repeated, to continuously provide updated position determination values for one or more target UEs with each iteration of the coordinated schedule.

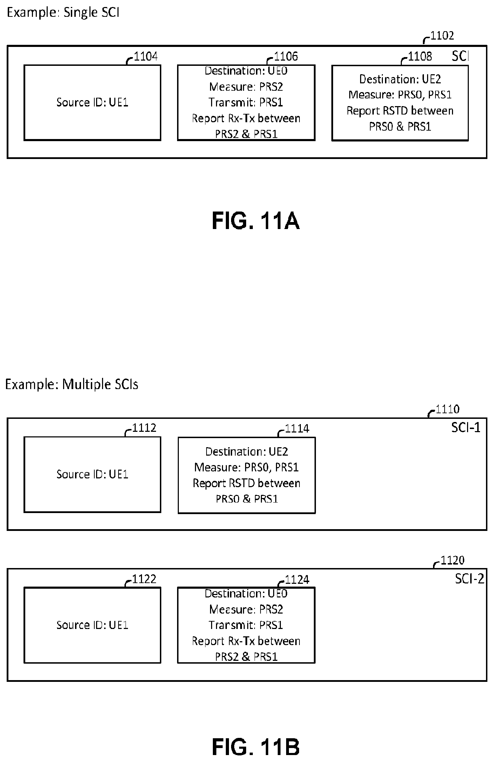

**FIGs. 11A** and **11B** illustrate different strategies for dynamically scheduling transmissions and measurements of wireless reference signals for position determination, according to some embodiments. FIG. 11A shows a single sideline control information (SCI) message 1102 sent from one UE (e.g., initiative UE 430, referred to in the figure as "UE1") to multiple other UEs, including a target UE 410 (referred to in the figure as "UE0," and a relay UE 420 (referred to in the figure as "UE2). The single SCI message 1102 dynamically schedules a RSTD measurement and a Rx-TX time difference measurement. These measurements may support, for example, position determination based on differential AoA and/or multilateration corresponding to the intersection of ellipses, as discussed.

As shown, the single SCI message 1102 comprises multiple sub-parts. A first sub-part 1104 comprises a field identifying the sender of the SCI message 1102 as "UE1." A second sub-part 1106 includes a destination field indicating that the sub-part is directed to "UE0," which is the target UE in this example. Sub-part 1106 also includes additional fields instructing "UE0" to measure PRS2, transmit PRS1, and report the Rx-Tx time difference associated with PRS2 and PRS1. A third sub-part 1108 of the single SCI message 1102 includes a destination field indicating that the sub-part is directed to "UE2," which is the relay UE in this example. Sub-part 1108 also includes additional fields instructing "UE2" to measure PRS0 and PRS1 and report the RSTD measurement between PRS0 and PRS1. Reporting may be accomplishes using one or more messages, such as other SCI message(s).

By contrast, FIG. 11B shows multiple SCI messages, including a first SCI message 1110 and a second SCI message 1120, sent from one UE (e.g., initiative UE 430, referred to in the figure as "UE1") to multiple other UEs. The first SCI message 1110 dynamically schedules a RSTD measurement, and the second SCI message 1120 dynamically schedules a Rx-TX time difference measurement. Again, these measurements may support, for example, position determination based on differential AoA and/or multilateration corresponding to the intersection of ellipses, as discussed.

The first SCI message 1110 comprises multiple sub-parts. A first sub-part 1112 comprises a field identifying the sender of the SCI message 1110 as "UE1." A second sub-part 1114 includes a destination field indicating that the sub-part is directed to "UE2," which is the relay UE in this example. Sub-part 1114 also includes additional fields instructing "UE2" to measure PRS0 and PRS1 and report the RSTD measurement between PRS0 and PRS1. The second SCI message 1120 also comprises multiple sub-parts. A first sub-part 1122 comprises a field identifying the sender of the SCI message 1120 as "UE1," as well. A second sub-part 1124 includes a destination field indicating that this sub-part is directed to "UE0," which is the target UE in this example. Sub-part 1124 also includes additional fields instructing "UE0" to measure PRS2, transmit PRS1, and report the Rx-Tx time difference associated with PRS2 and PRS1. Again, reporting may be accomplishes using one or more messages, such as other SCI message(s).

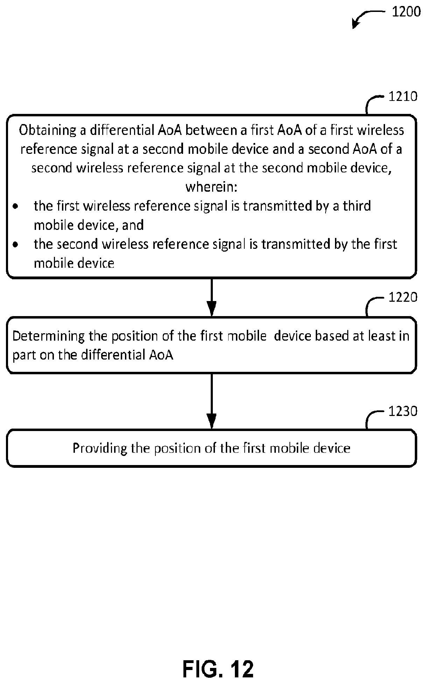

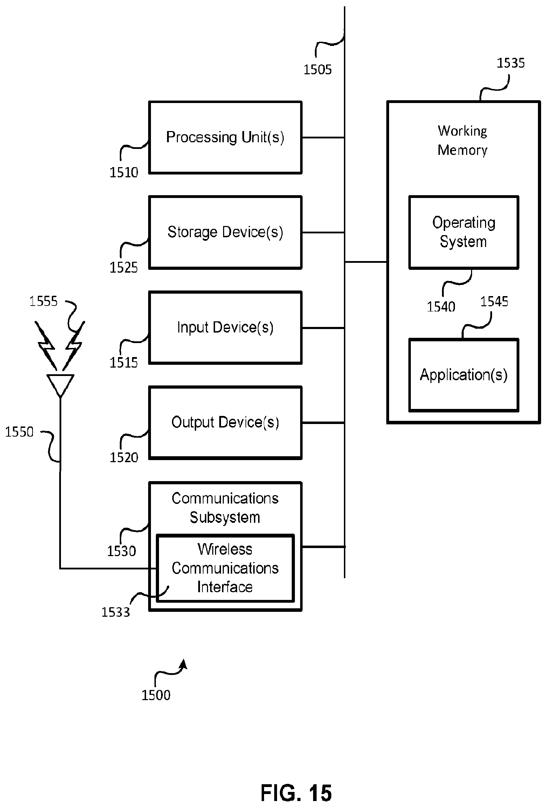

**FIG. 12** is a flow diagram of a method 1200 of enabling positioning of a first mobile device using differential AoA, according to an embodiment. Here, the first mobile device may correspond with a target UE 410, and a second mobile device may correspond with an anchor UE 420, and a third mobile device may correspond with an initiative UE 430, as described in FIGS. 4-10. Further, as illustrated in the example processes of these figures, the operations performed by different devices may vary, depending on whether positioning is UE-assisted or UE-based, and/or other factors. Accordingly, means for performing the functionality illustrated in one or more of the blocks shown in FIG. 12 may be performed by hardware and/or software components of a target UE 410, an anchor UE 420, an initiative UE 430, or location server 160, which may be located in a base station or any one of the aforementioned UEs. Example components of a target UE 410, an anchor UE 420, or an initiative UE 430 are illustrated in FIG. 17 and described in more detail below. Example components of a location server are illustrated in FIG. 17 or FIG. 15 and described in more detail below.

At block 1210, the functionality comprises obtaining a differential AoA between a first AoA of a first wireless reference signal at a second mobile device and a second AoA of a second wireless reference signal at the second mobile device, wherein the first wireless reference signal is transmitted by a third mobile device, and the second wireless reference signal is transmitted by the first mobile device. The performance of the functionality at block 1210 may vary, depending on the type of device performing the functionality. For example, a location server may obtain the differential AoA by receiving the differential AoA from an anchor UE. On the other hand, the anchor UE itself may obtain the differential AoA as indicated in FIGS. 8, by taking the difference of AoA measurements of first and second wireless reference signals. As noted in the embodiments above, reference signals may comprise PRS reference signals (e.g., SL-PRS), but embodiments are not so limited. According to some embodiments, the first wireless reference signal may comprise a PRS, an SSB, a Tracking Reference Signal (TRS), a Channel State Information Reference Signal (CSIRS), or DMRS, or any combination thereof. Additionally or alternatively, the first wireless reference signal may comprise an SRS to the extent SRS may be used for SL communications. Additionally or alternatively, the second wireless reference signal may comprise an SL-PRS, a DMRS, or a CSIRS, or any combination thereof. The first and second wireless reference signals may be frequency domain multiplexed. Accordingly, according to some embodiments the first wireless reference signal may be on a first wireless frequency band and the second wireless reference signal may be on a second wireless frequency band.

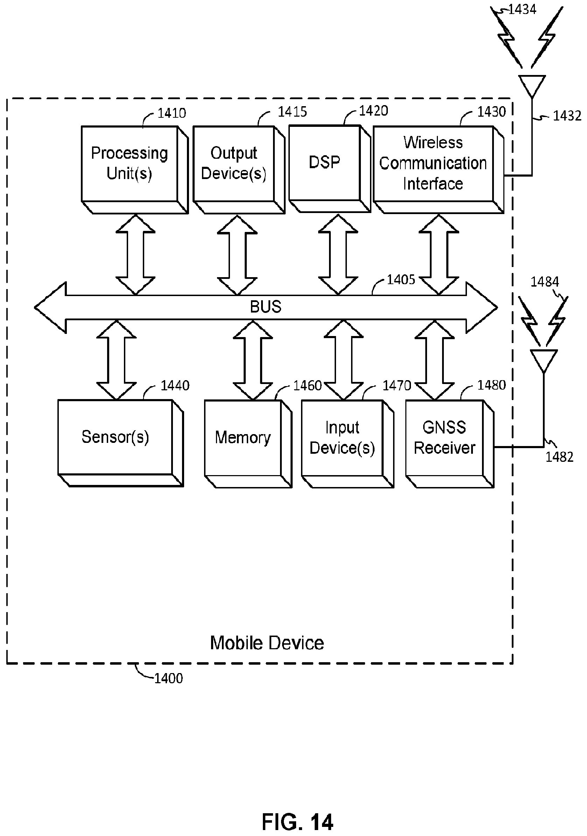

Means for performing functionality at block 1210 may comprise a bus 1405, wireless communication interface 1430, digital signal processor (DSP) 1420, processing unit 1410, memory 1460, and/or other components of a mobile device, as illustrated in FIG.14. Additionally or alternatively, means for performing functionality at block 1210 may comprise a bus 1405, communications subsystem 1430, processing unit(s) 1410, working memory 1435, and/or other components of a computer system, as illustrated in FIG. 14.

At block 1220, the functionality comprises determining the position of the first mobile device based at least in part on the differential AoA. As indicated in the previously-described embodiments, the determination may further be based on ToA measurements (e.g., to determine distances based on equation (3)). Thus, some embodiments may further comprise determining a first time difference, wherein the first time difference comprises a time difference between (i) a time a third wireless reference signal transmitted by the third mobile device is received at the first mobile device and (ii) a time the first mobile device transmits the second wireless reference signal. These embodiments further comprise determining a second time difference, wherein the second time difference comprises a time difference between (i) a time the first wireless reference signal transmitted by the third mobile device is received at the second mobile device, and (ii) a time the second wireless reference signal transmitted by the first mobile device is received at the second mobile device. In such embodiments, determining the position of the first mobile device is further based on the first time difference and the second time difference. As noted, the reference signal used to measure ToA at the anchor UE may be the same reference signal or a different reference signal as the reference signal used at the target UE to measure ToA. As such, according to some embodiments, the first wireless reference signal and the third wireless reference signal comprise the same signal. Alternatively, the first wireless reference signal and the third wireless reference signal may comprise different signals, and determining the position of the first mobile device is further based on a difference in time between the transmission of the first wireless reference signal and the third wireless reference signal.

As noted, embodiments may further involve taking additional measurements and/or resolving ambiguity. For example, according to some embodiments, the method 1200 may further comprise obtaining an RSTD measurement indicative of a time difference between a time the first wireless reference signal is received at the second mobile device and a time the second wireless reference signal is received at the second mobile device, wherein determining the position of the first mobile device is performed based on a determination that the time difference is below a threshold. According to some embodiments, determining the position of the first mobile device may comprise resolving an ambiguity of the position of the first mobile device based on a second differential AoA indicative of an angle at the second mobile device between a fourth mobile device and the first mobile device, historical location information or tracking information for the first mobile device, or location information for the first mobile device obtained from the first mobile device, or any combination thereof.

Means for performing functionality at block 1220 may comprise a bus 1405, DSP 1420, processing unit 1410, memory 1460, and/or other components of a mobile device, as illustrated in FIG. 14. Additionally or alternatively, means for performing functionality at block 1220 may comprise a bus 1405, processing unit(s) 1410, working memory 1435, and/or other components of a computer system, as illustrated in FIG. 14.

At block 1230, the functionality comprises providing the position of the first mobile device. As with other functions described herein, the particulars of this functionality may vary depending on the type of device performing the method 1200. For example, according to some embodiments, the method 1200 is performed by the second mobile device. In such embodiments, providing the position of the first mobile device may comprise sending the position of the first mobile device from the second mobile device to the first mobile device. Additionally or alternatively, providing the position of the first mobile device comprises providing the position of the first mobile device to an application executed by the second mobile device. Further, for embodiments in which the method is performed by the second mobile device, the method may further comprise prior to obtaining the differential AoA obtaining motion data regarding a motion of the second mobile device and sending information indicative of the motion mobile data to a location server. According to some embodiments, the method 1200 may further comprise sending, from the second mobile device to a location server, information indicative of a capability of the second mobile device for determining the differential AoA.

A different set of functions may be performed if the method 1200 is performed by a location server. For example, in such embodiments, obtaining the differential AoA comprises receiving the differential AoA from the second mobile device. Such embodiments may further comprise receiving motion data regarding a motion of the second mobile device, determining a time-domain proximity for the first wireless reference signal and second wireless reference signal based at least in part on the motion data, and configuring the third mobile device to send the first wireless signal, configuring the first mobile device to send the second wireless signal, or both, based at least in part on the time-domain proximity. Additionally or alternatively, embodiments may comprise receiving a request at the location server for the position of the first mobile device from a requesting entity, and wherein providing the position of the first mobile device comprises sending the position of the first mobile device from the location server to the requesting entity.

Means for performing functionality at block 1230 may comprise a bus 1405, wireless communication interface 1430, DSP 1420, processing unit 1410, memory 1460, and/or other components of a mobile device, as illustrated in FIG. 14. Additionally or alternatively, means for performing functionality at block 1230 may comprise a bus 1405, communications subsystem 1430, processing unit(s) 1410, working memory 1435, and/or other components of a computer system, as illustrated in FIG. 14.

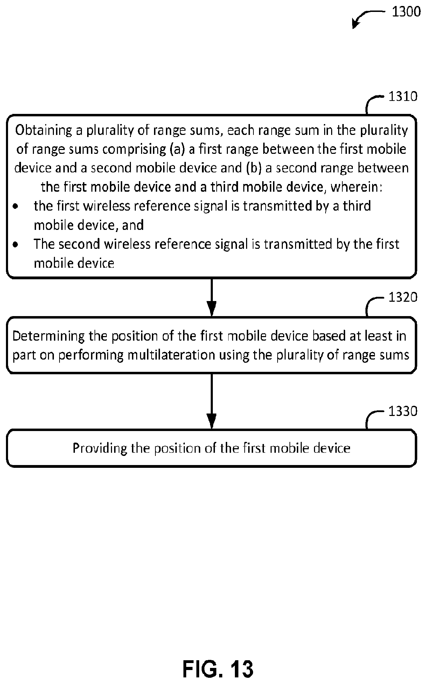

FIG. 13 is a flow diagram of a method of enabling positioning of a first mobile device using multilateration based on a plurality of range sums, according to an embodiment. Here, the first mobile device may correspond with a target UE 410, and a second mobile device may correspond with an anchor UE 420, and a third mobile device may correspond with an initiative UE 430, as described in FIGS. 4-10. Further, as illustrated in the example processes of these figures, the operations performed by different devices may vary, depending on whether positioning is UE-assisted or UE-based, and/or other factors. Accordingly, means for performing the functionality illustrated in one or more of the blocks shown in FIG. 13 may be performed by hardware and/or software components of a target UE 410, an anchor UE 420, an initiative UE 430, or location server 160, which may be located in a base station or any one of the aforementioned UEs. Example components of a target UE 410, an anchor UE 420, or an initiative UE 430 are illustrated in FIG. 17 and described in more detail below. Example components of a location server are illustrated in FIG. 17 or FIG. 15 and described in more detail below.

At block 1310, the functionality comprises obtaining a plurality of range sums, each range sum in the plurality of range sums comprising (a) a first range between the first mobile device and a second mobile device and (b) a second range between the first mobile device and a third mobile device, wherein the first wireless reference signal is transmitted by a third mobile device, and the second wireless reference signal is transmitted by the first mobile device. As discussed previously, the performance of the functionality at block 1310 may vary, depending on the type of device performing the functionality. As noted in the embodiments above, reference signals may comprise PRS reference signals (e.g., SL-PRS), but embodiments are not so limited. According to some embodiments, the first wireless reference signal may comprise a PRS, an SSB, a Tracking Reference Signal (TRS), a Channel State Information Reference Signal (CSIRS), or DMRS, or any combination thereof. Additionally or alternatively, the first wireless reference signal may comprise an SRS to the extent SRS may be used for SL communications. Additionally or alternatively, the second wireless reference signal may comprise an SL-PRS, a DMRS, or a CSIRS, or any combination thereof. The first and second wireless reference signals may be frequency domain multiplexed. Accordingly, according to some embodiments the first wireless reference signal may be on a first wireless frequency band and the second wireless reference signal may be on a second wireless frequency band.

Means for performing functionality at block 1310 may comprise a bus 1405, wireless communication interface 1430, digital signal processor (DSP) 1420, processing unit 1410, memory 1460, and/or other components of a mobile device, as illustrated in FIG. 14. Additionally or alternatively, means for performing functionality at block 1310 may comprise a bus 1405, communications subsystem 1430, processing unit(s) 1410, working memory 1435, and/or other components of a computer system, as illustrated in FIG. 14.

At block 1320, the functionality comprises determining the position of the first mobile device based at least in part on performing multilateration using the plurality of range sums. Some embodiments may further comprise determining a first time difference, wherein the first time difference comprises a time difference between (i) a time a third wireless reference signal transmitted by the third mobile device is received at the first mobile device and (ii) a time the first mobile device transmits the second wireless reference signal. These embodiments further comprise determining a second time difference, wherein the second time difference comprises a time difference between (i) a time the first wireless reference signal transmitted by the third mobile device is received at the second mobile device, and (ii) a time the second wireless reference signal transmitted by the first mobile device is received at the second mobile device. In such embodiments, determining the position of the first mobile device is further based on the first time difference and the second time difference. According to some embodiments, the first wireless reference signal and the third wireless reference signal comprise the same signal. Alternatively, the first wireless reference signal and the third wireless reference signal may comprise different signals, and determining the position of the first mobile device is further based on a difference in time between the transmission of the first wireless reference signal and the third wireless reference signal.

Means for performing functionality at block 1320 may comprise a bus 1405, DSP 1420, processing unit 1410, memory 1460, and/or other components of a mobile device, as illustrated in FIG. 14. Additionally or alternatively, means for performing functionality at block 1320 may comprise a bus 1405, processing unit(s) 1410, working memory 1435, and/or other components of a computer system, as illustrated in FIG. 14.

At block 1330, the functionality comprises providing the position of the first mobile device. As with other functions described herein, the particulars of this functionality may vary depending on the type of device performing the method 1300. For example, according to some embodiments, the method 1300 is performed by the second mobile device. In such embodiments, providing the position of the first mobile device may comprise sending the position of the first mobile device from the second mobile device to the first mobile device. Additionally or alternatively, providing the position of the first mobile device comprises providing the position of the first mobile device to an application executed by the second mobile device. Further, for embodiments in which the method is performed by the second mobile device, the method may further comprise prior to obtaining the differential AoA obtaining motion data regarding a motion of the second mobile device and sending information indicative of the motion mobile data to a location server. According to some embodiments, the method 1300 may further comprise sending, from the second mobile device to a location server, information indicative of a capability of the second mobile device for determining the differential AoA.

A different set of functions may be performed if the method 1300 is performed by a location server. Such embodiments may further comprise receiving motion data regarding a motion of the second mobile device, determining a time-domain proximity for the first wireless reference signal and second wireless reference signal based at least in part on the motion data, and configuring the third mobile device to send the first wireless signal, configuring the first mobile device to send the second wireless signal, or both, based at least in part on the time-domain proximity. Additionally or alternatively, embodiments may comprise receiving a request at the location server for the position of the first mobile device from a requesting entity, and wherein providing the position of the first mobile device comprises sending the position of the first mobile device from the location server to the requesting entity.

Means for performing functionality at block 1330 may comprise a bus 1405, wireless communication interface 1430, DSP 1420, processing unit 1410, memory 1460, and/or other components of a mobile device, as illustrated in FIG. 14. Additionally or alternatively, means for performing functionality at block 1330 may comprise a bus 1405, communications subsystem 1430, processing unit(s) 1410, working memory 1435, and/or other components of a computer system, as illustrated in FIG. 14.

**FIG. 14** illustrates an embodiment of a mobile device 1400, which can be utilized as a target UE, anchor UE, or other UE as described herein above (e.g., in association with FIGS. 1-9). For example, the mobile device 1400 can perform one or more of the functions of the methods shown in FIGs. 12 and/or 13. It should be noted that FIG. 14 is meant only to provide a generalized illustration of various components, any or all of which may be utilized as appropriate. It can be noted that, in some instances, components illustrated by FIG. 14 can be localized to a single physical device and/or distributed among various networked devices, which may be disposed at different physical locations. Furthermore, as previously noted, the functionality of the UE discussed in the previously described embodiments may be executed by one or more of the hardware and/or software components illustrated in FIG. 14.

The mobile device 1400 is shown comprising hardware elements that can be electrically coupled via a bus 1405 (or may otherwise be in communication, as appropriate). The hardware elements may include a processing unit(s) 1410 which can include without limitation one or more general-purpose processors, one or more special-purpose processors (such as DSP chips, graphics acceleration processors, application specific integrated circuits (ASICs), and/or the like), and/or other processing structures or means. As shown in FIG. 14, some embodiments may have a separate DSP 1420, depending on desired functionality. Location determination and/or other determinations based on wireless communication may be provided in the processing unit(s) 1410 and/or wireless communication interface 1430 (discussed below). The mobile device 1400 also can include one or more input devices 1470, which can include without limitation one or more keyboards, touch screens, touch pads, microphones, buttons, dials, switches, and/or the like; and one or more output devices 1415, which can include without limitation one or more displays (e.g., touch screens), light emitting diodes (LEDs), speakers, and/or the like.

The mobile device 1400 may also include a wireless communication interface 1430, which may comprise without limitation a modem, a network card, an infrared communication device, a wireless communication device, and/or a chipset (such as a Bluetooth® device, an IEEE 802.11 device, an IEEE 802.15.4 device, a Wi-Fi device, a WiMAX device, a WAN device, and/or various cellular devices, etc.), and/or the like, which may enable the mobile device 1400 to communicate with other devices as described in the embodiments above. The wireless communication interface 1430 may permit data and signaling to be communicated (e.g., transmitted and received) with TRPs of a network, for example, via eNBs, gNBs, ng-eNBs, access points, various base stations and/or other access node types, and/or other network components, computer systems, and/or any other electronic devices (UEs/mobile devices, etc.) communicatively coupled with TRPs, as described herein. The communication can be carried out via one or more wireless communication antenna(s) 1432 that send and/or receive wireless signals 1434. According to some embodiments, the wireless communication antenna(s) 1432 may comprise a plurality of discrete antennas, antenna arrays, or any combination thereof.

Depending on desired functionality, the wireless communication interface 1430 may comprise a separate receiver and transmitter, or any combination of transceivers, transmitters, and/or receivers to communicate with base stations (e.g., ng-eNBs and gNBs) and other terrestrial transceivers, such as wireless devices and access points. The mobile device 1400 may communicate with different data networks that may comprise various network types. For example, a Wireless Wide Area Network (WWAN) may be a CDMA network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000, WCDMA, and so on. CDMA2000 includes IS-95, IS-2000 and/or IS-856 standards. A TDMA network may implement Global System for Mobile Communications (GSM), Digital Advanced Mobile Phone System (D-AMPS), or some other RAT. An OFDMA network may employ LTE, LTE Advanced, 5G NR, and so on. 5G NR, LTE, LTE Advanced, GSM, and WCDMA are described in documents from 3GPP. Cdma2000 is described in documents from a consortium named "3rd Generation Partnership Project X3" (3GPP2). 3GPP and 3GPP2 documents are publicly available. A wireless local area network (WLAN) may also be an IEEE 802.11x network, and a wireless personal area network (WPAN) may be a Bluetooth network, an IEEE 802.15x, or some other type of network. The techniques described herein may also be used for any combination of WWAN, WLAN and/or WPAN.

The mobile device 1400 can further include sensor(s) 1440. Sensors 1440 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the mobile device 1400 may also include a Global Navigation Satellite System (GNSS) receiver 1480 capable of receiving signals 1484 from one or more GNSS satellites using an antenna 1482 (which could be the same as antenna 1432). Positioning based on GNSS signal measurement can be utilized to complement and/or incorporate the techniques described herein. The GNSS receiver 1480 can extract a position of the mobile device 1400, using conventional techniques, from GNSS satellites of a GNSS system, such as Global Positioning System (GPS), Galileo, GLONASS, Quasi-Zenith Satellite System (QZSS) over Japan, Indian Regional Navigational Satellite System (IRNSS) over India, BeiDou Navigation Satellite System (BDS) over China, and/or the like. Moreover, the GNSS receiver 1480 can be used with various augmentation systems (e.g., a Satellite Based Augmentation System (SBAS)) that may be associated with or otherwise enabled for use with one or more global and/or regional navigation satellite systems, such as, e.g., Wide Area Augmentation System (WAAS), European Geostationary Navigation Overlay Service (EGNOS), Multi-functional Satellite Augmentation System (MSAS), and Geo Augmented Navigation system (GAGAN), and/or the like.

It can be noted that, although GNSS receiver 1480 is illustrated in FIG. 14 as a distinct component, embodiments are not so limited. As used herein, the term "GNSS receiver" may comprise hardware and/or software components configured to obtain GNSS measurements (measurements from GNSS satellites). In some embodiments, therefore, the GNSS receiver may comprise a measurement engine executed (as software) by one or more processing units, such as processing unit(s) 1410, DSP 1420, and/or a processing unit within the wireless communication interface 1430 (e.g., in a modem). A GNSS receiver may optionally also include a positioning engine, which can use GNSS measurements from the measurement engine to determine a position of the GNSS receiver using an Extended Kalman Filter (EKF), Weighted Least Squares (WLS), a hatch filter, particle filter, or the like. The positioning engine may also be executed by one or more processing units, such as processing unit(s) 1410 or DSP 1420.

The mobile device 1400 may further include and/or be in communication with a memory 1460. The memory 1460 can include, without limitation, local and/or network accessible storage, a disk drive, a drive array, an optical storage device, a solid-state storage device, such as a random access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 1460 of the mobile device 1400 also can comprise software elements (not shown in FIG. 14), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1460 that are executable by the mobile device 1400 (and/or processing unit(s) 1410 or DSP 1420 within mobile device 1400). In an aspect, then such code and/or instructions can be used to configure and/or adapt a general-purpose computer (or other device) to perform one or more operations in accordance with the described methods.

**FIG. 15** is a block diagram of an embodiment of a computer system 1500, which may be used, in whole or in part, to provide the functions of one or more network components as described in the embodiments herein (e.g., location server 160 of FIGS. 1, and 4; and/or LMF of FIG. 2). It should be noted that FIG. 15 is meant only to provide a generalized illustration of various components, any or all of which may be utilized as appropriate. FIG. 15, therefore, broadly illustrates how individual system elements may be implemented in a relatively separated or relatively more integrated manner. In addition, it can be noted that components illustrated by FIG. 15 can be localized to a single device and/or distributed among various networked devices, which may be disposed at different geographical locations.

The computer system 1500 is shown comprising hardware elements that can be electrically coupled via a bus 1505 (or may otherwise be in communication, as appropriate). The hardware elements may include processing unit(s) 1510, which may comprise without limitation one or more general-purpose processors, one or more special-purpose processors (such as digital signal processing chips, graphics acceleration processors, and/or the like), and/or other processing structure, which can be configured to perform one or more of the methods described herein. The computer system 1500 also may comprise one or more input devices 1515, which may comprise without limitation a mouse, a keyboard, a camera, a microphone, and/or the like; and one or more output devices 1520, which may comprise without limitation a display device, a printer, and/or the like.

The computer system 1500 may further include (and/or be in communication with) one or more non-transitory storage devices 1525, which can comprise, without limitation, local and/or network accessible storage, and/or may comprise, without limitation, a disk drive, a drive array, an optical storage device, a solid-state storage device, such as a RAM and/or ROM, which can be programmable, flash-updateable, and/or the like. Such storage devices may be configured to implement any appropriate data stores, including without limitation, various file systems, database structures, and/or the like. Such data stores may include database(s) and/or other data structures used store and administer messages and/or other information to be sent to one or more devices via hubs, as described herein.

The computer system 1500 may also include a communications subsystem 1530, which may comprise wireless communication technologies managed and controlled by a wireless communication interface 1533, as well as wired technologies (such as Ethernet, coaxial communications, universal serial bus (USB), and the like). The wireless communication interface 1533 may send and receive wireless signals 1555 (e.g., signals according to 5G NR or LTE) via wireless antenna(s) 1550. Thus the communications subsystem 1530 may comprise a modem, a network card (wireless or wired), an infrared communication device, a wireless communication device, and/or a chipset, and/or the like, which may enable the computer system 1500 to communicate on any or all of the communication networks described herein to any device on the respective network, including a UE/mobile device, base stations and/or other TRPs, and/or any other electronic devices described herein. Hence, the communications subsystem 1530 may be used to receive and send data as described in the embodiments herein.

In many embodiments, the computer system 1500 will further comprise a working memory 1535, which may comprise a RAM or ROM device, as described above. Software elements, shown as being located within the working memory 1535, may comprise an operating system 1540, device drivers, executable libraries, and/or other code, such as one or more applications 1545, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processing unit within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the storage device(s) 1525 described above. In some cases, the storage medium might be incorporated within a computer system, such as computer system 1500. In other embodiments, the storage medium might be separate from a computer system (e.g., a removable medium, such as an optical disc), and/or provided in an installation package, such that the storage medium can be used to program, configure, and/or adapt a general purpose computer with the instructions/code stored thereon. These instructions might take the form of executable code, which is executable by the computer system 1500 and/or might take the form of source and/or installable code, which, upon compilation and/or installation on the computer system 1500 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used without departing from the spirit of the disclosure. For example, the above elements may merely be a component of a larger system, wherein other rules may take precedence over or otherwise modify the application of the various embodiments. Also, a number of steps may be undertaken before, during, or after the above elements are considered. Accordingly, the above description does not limit the scope of the disclosure.

In view of this description embodiments may include different combinations of features. Implementation examples are described in the following numbered clauses:

Clause 1: A method of enabling positioning of a first mobile device, the method comprising: obtaining a differential angle-of-arrival (AoA) between (a) a first AoA of a first wireless reference signal at a second mobile device and (b) a second AoA of a second wireless reference signal at the second mobile device, wherein: the first wireless reference signal is transmitted by a third mobile device, and the second wireless reference signal is transmitted by the first mobile device; determining a position of the first mobile device based at least in part on the differential AoA; and providing the position of the first mobile device.

Clause 2: The method of clause 1, further comprising: obtaining an estimated distance between the first mobile device and the second mobile device based on timing information associated with the first wireless reference signal, the second wireless reference signal, and a third wireless reference signal transmitted by the third mobile device to the first mobile device, wherein the determining the position of the first mobile device is further based on the estimated distance between the first mobile device and the second mobile device.

Clause 3: The method of clause 2 wherein obtaining the estimated distance between the first mobile device and the second mobile device comprises: obtaining a first time difference, the first time difference comprising a time difference between: a time the third wireless reference signal transmitted by the third mobile device is received at the first mobile device, and a time the first mobile device transmits the second wireless reference signal; obtaining a second time difference, the second time difference comprising a time difference between: a time the first wireless reference signal transmitted by the third mobile device is received at the second mobile device, and a time the second wireless reference signal transmitted by the first mobile device is received at the second mobile device; and generating the estimated distance between the first mobile device and the second mobile device, based on the first time difference and the second time difference.

Clause 4: The method of any one of clauses 1-3 wherein the method is performed by the first mobile device.

Clause 5: The method of clause 4 wherein obtaining the differential AoA comprises receiving the differential AoA from the second mobile device, obtaining the first time difference comprises generating the first time difference at the first mobile device, based on measuring the time the third wireless reference signal is received at the first mobile device and measuring the time the first mobile device transmits the second wireless reference signal; and obtaining the second time difference comprises receiving the second time difference from the second mobile device.

Clause 6: The method of any one of clauses 1-3 wherein the method is performed by the second mobile device.

Clause 7: The method of clause 6 wherein obtaining the differential AoA comprises generating the differential AoA based on measuring (a) the first AoA of the first wireless reference signal at the second mobile device and (b) the second AoA of the second wireless reference signal at the second mobile device, obtaining the first time difference comprises receiving the first time difference from the first mobile device, and obtaining the second time difference comprises generating the second time difference at the second mobile device, based on measuring the time the first wireless reference signal is received at the second mobile device and measuring the time the second wireless reference signal is received at the second mobile device.

Clause 8: The method of clause 6 wherein providing the position of the first mobile device comprises sending the position of the first mobile device from the second mobile device to the first mobile device.

Clause 9: The method of any one of clauses 1-8 wherein determining the position of the first mobile device comprises resolving an ambiguity of the position of the first mobile device based on: a second differential AoA indicative of an angle at the second mobile device between a fourth mobile device and the first mobile device, historical location information or tracking information for the first mobile device, or location information for the first mobile device obtained from the first mobile device, or any combination thereof.

Clause 10: The method of any one of clauses 1-9 further comprising obtaining a Reference Signal Time Difference (RSTD) measurement indicative of a time difference between a time the first wireless reference signal is received at the second mobile device and a time the second wireless reference signal is received at the second mobile device, wherein determining the position of the first mobile device is based on a determination that the time difference is below a threshold.

Clause 11: The method of any one of clauses 1-10 wherein the first wireless reference signal and the third wireless reference signal comprise the same signal.

Clause 12: The method of any one of clauses 1-10 wherein the first wireless reference signal and the third wireless reference signal comprise different signals, and determining the position of the first mobile device is further based on a difference in time between the transmission of the first wireless reference signal and the third wireless reference signal.

Clause 13: The method of any one of clauses 1-12 wherein the second mobile device and the third mobile device are out of range of a Transmission Reception Point (TRP).

Clause 14: The method of any one of clauses 1-13 wherein the first wireless reference signal and the second wireless reference signal are transmitted according to a coordinated schedule for transmission and measurement of wireless reference signals for a group of mobile devices.

Clause 15: The method of clause 14 wherein the coordinated schedule is proposed by one of the group of mobile devices and confirmed by other ones of the group of mobile devices.

Clause 16: The method of clause 15 wherein, prior to the coordinated schedule being proposed, parameters including one or more of capabilities, resources, and/or Quality of Service (QoS) are exchanged among one or more of the group of mobile devices.

Clause 17: The method of clause 14 wherein the differential AoA is measured by the second mobile device according to the coordinated schedule.

Clause 18: The method of clause 17 wherein after measurement of the differential AoA, signal measurements are exchanged among one or more of the group of mobile devices.

Clause 19: The method of clause 18 wherein after exchange of signal measurements among the one or more of the group of mobile devices, the position of the first mobile device is calculated by one of the group of mobile devices.

Clause 20: The method of any one of clauses 1-13 wherein the first wireless reference signal and the second wireless reference signal are dynamically scheduled based on one or more messages communicated among the first mobile device, the second mobile device, and the third mobile device.

Clause 21: The method of clause 20 wherein the one or more messages comprise a single message sent from one of the first mobile device, the second mobile device, and the third mobile device, and the single message is sent to other ones of the first mobile device, the second mobile device, and the third mobile device.

Clause 22: The method of clause 20 wherein the one or more messages comprise multiple messages sent from one of the first mobile device, the second mobile device, and the third mobile device, a first message of the multiple messages is sent to a first other one of the first mobile device, the second mobile device, and the third mobile device, and a second message of the multiple messages is sent to a second other one of the first mobile device, the second mobile device, and the third mobile device.

Clause 23: The method of clause 20 wherein each of the one or more messages is a sideline control information (SCI) message.

Clause 24: The method of any one of clauses 1-23 wherein the method does not require receiving, at the first mobile device, a wireless reference signal from the second mobile device.

Clause 25: The method of any one of clauses 1-24 wherein the determining the position of the first mobile device is further based on known positions of the second mobile device and the third mobile device.

Clause 26: The method of any one of clauses 1-25 wherein the first wireless reference signal comprises: a Positioning Reference Signal (PRS), a Synchronization Signal Block (SSB), a Tracking Reference Signal (TRS), a Channel State Information Reference Signal (CSIRS), or Demodulation Reference Signal (DMRS), or any combination thereof.

Clause 27: The method of any one of clauses 1-26 wherein the second wireless reference signal comprises: a sidelink PRS (SL-PRS), a DMRS, or a CSIRS, or any combination thereof.

Clause 28: A device enabling positioning of a first mobile device, the device comprising: a transceiver; a memory; and one or more processing units communicatively coupled with the transceiver and the memory, the one or more processing units configured to: obtain a differential angle-of-arrival (AoA) between (a) a first AoA of a first wireless reference signal at a second mobile device and (b) a second AoA of a second wireless reference signal at the second mobile device, wherein: the first wireless reference signal is transmitted by a third mobile device, and the second wireless reference signal is transmitted by the first mobile device; determine a position of the first mobile device based at least in part on the differential AoA; and provide the position of the first mobile device.

Clause 29: A device enabling positioning of a first mobile device, the device comprising: means for obtaining a differential angle-of-arrival (AoA) between (a) a first AoA of a first wireless reference signal at a second mobile device and (b) a second AoA of a second wireless reference signal at the second mobile device, wherein: the first wireless reference signal is transmitted by a third mobile device, and the second wireless reference signal is transmitted by the first mobile device; means for determining a position of the first mobile device based at least in part on the differential AoA; and means for providing the position of the first mobile device.

Clause 30: A non-transitory computer-readable medium storing instructions for enabling positioning of a first mobile device, the instructions comprising code for: obtaining a differential angle-of-arrival (AoA) between (a) a first AoA of a first wireless reference signal at a second mobile device and (b) a second AoA of a second wireless reference signal at the second mobile device, wherein: the first wireless reference signal is transmitted by a third mobile device, and the second wireless reference signal is transmitted by the first mobile device; determining a position of the first mobile device based at least in part on the differential AoA; and providing the position of the first mobile device.

Clause 31: A method for enabling positioning of a first mobile device, the method comprising: obtaining a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device; determining a position of the first mobile device based at least in part on performing multilateration using the plurality of range sums; and providing the position of the first mobile device.

Clause 32: The method of clause 31, wherein each range sum in the plurality of range sums corresponds to a unique ellipse having a pair of foci corresponding to known positions of the second mobile device and the third mobile device.

Clause 33: The method of any one of clauses 31-32 wherein each range sum in the plurality of range sums is based on timing information associated with the first wireless reference signal, the second wireless reference signal, and a third wireless reference signal transmitted by the third mobile device to the first mobile device.

Clause 34: The method of clause 33 wherein obtaining each range sum in the plurality of range sums comprises: obtaining a first time difference, the first time difference comprising a time difference between: a time the third wireless reference signal transmitted by the third mobile device is received at the first mobile device, and a time the first mobile device transmits the second wireless reference signal; obtaining a second time difference, the second time difference comprising a time difference between: a time the first wireless reference signal transmitted by the third mobile device is received at the second mobile device, and a time the second wireless reference signal transmitted by the first mobile device is received at the second mobile device; and generating the range sum, based on the first time difference and the second time difference.

Clause 35: The method of any one of clauses 31-34 wherein the method is performed by the first mobile device.

Clause 36: The method of clause 35 wherein obtaining the first time difference comprises generating the first time difference at the first mobile device, based on measuring the time the third wireless reference signal is received at the first mobile device and measuring the time the first mobile device transmits the second wireless reference signal; and obtaining the second time difference comprises receiving the second time difference from the second mobile device.

Clause 37: The method of any one of clauses 31-34 wherein the method is performed by the second mobile device.

Clause 38: The method of clause 37 wherein obtaining the first time difference comprises receiving the first time difference from the first mobile device; and obtaining the second time difference comprises generating the second time difference at the second mobile device, based on measuring the time the first wireless reference signal is received at the second mobile device and measuring the time the second wireless reference signal is received at the second mobile device.

Clause 39: The method of any one of clauses 31-38 wherein the first wireless reference signal and the third wireless reference signal comprise the same signal.

Clause 40: The method of any one of clauses 31-38 wherein the first wireless reference signal and the third wireless reference signal comprise different signals, and the range sum is further based on a difference in time between the transmission of the first wireless reference signal and the third wireless reference signal.

Clause 41: The method of any one of clauses 31-40 wherein the second mobile device and the third mobile device are out of range of a Transmission Reception Point (TRP).

Clause 42: The method of any one of clauses 31-41 wherein the method does not require transmitting a wireless reference signal from the second mobile device to the first mobile device.

Clause 43: The method of any one of clauses 31-42 wherein the first wireless reference signal comprises: a Positioning Reference Signal (PRS), a Synchronization Signal Block (SSB), a Tracking Reference Signal (TRS), a Channel State Information Reference Signal (CSIRS), or Demodulation Reference Signal (DMRS), or any combination thereof.

Clause 44: The method of any one of clauses 31-43 wherein the second wireless reference signal comprises: a sidelink PRS (SL-PRS), a DMRS, or a CSIRS, or any combination thereof.

Clause 45: A device enabling positioning of a first mobile device, the device comprising: a transceiver; a memory; and one or more processing units communicatively coupled with the transceiver and the memory, the one or more processing units configured to: obtain a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device; determine a position of the first mobile device based at least in part on performing multilateration using the plurality of range sums; and provide the position of the first mobile device.

Clause 46: A device enabling positioning of a first mobile device, the device comprising: means for obtaining a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device; means for determining a position of the first mobile device based at least in part on performing multilateration using the plurality of range sums; and means for providing the position of the first mobile device.

Clause 47: A non-transitory computer-readable medium storing instructions for enabling positioning of a first mobile device, the instructions comprising code for: obtaining a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device; determining a position of the first mobile device based at least in part on performing multilateration using the plurality of range sums; and providing the position of the first mobile device.

Embodiments of the invention can be described with reference to the following numbered clauses, with preferred features laid out in the dependent clauses:

Clause 1. A method of enabling positioning of a first mobile device, the method comprising:
obtaining a differential angle-of-arrival (AoA) between (a) a first AoA of a first wireless reference signal at a second mobile device and (b) a second AoA of a second wireless reference signal at the second mobile device, wherein:

the first wireless reference signal is transmitted by a third mobile device, and
the second wireless reference signal is transmitted by the first mobile device;
determining a position of the first mobile device based at least in part on the differential AoA; and
providing the position of the first mobile device.

Clause 2. The method of clause 1, further comprising:

obtaining an estimated distance between the first mobile device and the second mobile device based on timing information associated with the first wireless reference signal, the second wireless reference signal, and a third wireless reference signal transmitted by the third mobile device to the first mobile device,
wherein the determining the position of the first mobile device is further based on the estimated distance between the first mobile device and the second mobile device.

Clause 3. The method of clause 2, wherein obtaining the estimated distance between the first mobile device and the second mobile device comprises:

obtaining a first time difference, the first time difference comprising a time difference between:

a time the third wireless reference signal transmitted by the third mobile device is received at the first mobile device, and
a time the first mobile device transmits the second wireless reference signal;

obtaining a second time difference, the second time difference comprising a time difference between:

a time the first wireless reference signal transmitted by the third mobile device is received at the second mobile device, and
a time the second wireless reference signal transmitted by the first mobile device is received at the second mobile device; and

generating the estimated distance between the first mobile device and the second mobile device, based on the first time difference and the second time difference.

Clause 4. The method of clause 3, wherein the method is performed by the first mobile device.

Clause 5. The method of clause 4, wherein:

obtaining the differential AoA comprises receiving the differential AoA from the second mobile device,
obtaining the first time difference comprises generating the first time difference at the first mobile device, based on measuring the time the third wireless reference signal is received at the first mobile device and measuring the time the first mobile device transmits the second wireless reference signal; and
obtaining the second time difference comprises receiving the second time difference from the second mobile device.

Clause 6. The method of clause 3, wherein the method is performed by the second mobile device.

Clause 7. The method of clause 6, wherein:

obtaining the differential AoA comprises generating the differential AoA based on measuring (a) the first AoA of the first wireless reference signal at the second mobile device and (b) the second AoA of the second wireless reference signal at the second mobile device,
obtaining the first time difference comprises receiving the first time difference from the first mobile device, and
obtaining the second time difference comprises generating the second time difference at the second mobile device, based on measuring the time the first wireless reference signal is received at the second mobile device and measuring the time the second wireless reference signal is received at the second mobile device.

Clause 8. The method of clause 6, wherein providing the position of the first mobile device comprises sending the position of the first mobile device from the second mobile device to the first mobile device.

Clause 9. The method of clause 1, wherein determining the position of the first mobile device comprises resolving an ambiguity of the position of the first mobile device based on:

a second differential AoA indicative of an angle at the second mobile device between a fourth mobile device and the first mobile device,
historical location information or tracking information for the first mobile device, or
location information for the first mobile device obtained from the first mobile device, or any combination thereof.

Clause 10. The method of clause 1, further comprising obtaining a Reference Signal Time Difference (RSTD) measurement indicative of a time difference between a time the first wireless reference signal is received at the second mobile device and a time the second wireless reference signal is received at the second mobile device, wherein determining the position of the first mobile device is based on a determination that the time difference is below a threshold.

Clause 11. The method of clause 1, wherein the first wireless reference signal and the third wireless reference signal comprise the same signal.

Clause 12. The method of clause 1, wherein the first wireless reference signal and the third wireless reference signal comprise different signals, and determining the position of the first mobile device is further based on a difference in time between the transmission of the first wireless reference signal and the third wireless reference signal.

Clause 13. The method of clause 1, wherein the second mobile device and the third mobile device are out of range of a Transmission Reception Point (TRP).

Clause 14. The method of clause 1, wherein the first wireless reference signal and the second wireless reference signal are transmitted according to a coordinated schedule for transmission and measurement of wireless reference signals for a group of mobile devices.

Clause 15. The method of clause 14, wherein the coordinated schedule is proposed by one of the group of mobile devices and confirmed by other ones of the group of mobile devices.

Clause 16. The method of clause 15, wherein, prior to the coordinated schedule being proposed, parameters including one or more of capabilities, resources, and/or Quality of Service (QoS) are exchanged among one or more of the group of mobile devices.

Clause 17. The method of clause 14, wherein the differential AoA is measured by the second mobile device according to the coordinated schedule.

Clause 18. The method of clause 17, wherein after measurement of the differential AoA, signal measurements are exchanged among one or more of the group of mobile devices.

Clause 19. The method of clause 18, wherein after exchange of signal measurements among the one or more of the group of mobile devices, the position of the first mobile device is calculated by one of the group of mobile devices.

Clause 20. The method of clause 1, wherein the first wireless reference signal and the second wireless reference signal are dynamically scheduled based on one or more messages communicated among the first mobile device, the second mobile device, and the third mobile device.

Clause 21. The method of clause 20, wherein:

the one or more messages comprise a single message sent from one of the first mobile device, the second mobile device, and the third mobile device, and
the single message is sent to other ones of the first mobile device, the second mobile device, and the third mobile device.

Clause 22. The method of clause 20, wherein:

the one or more messages comprise multiple messages sent from one of the first mobile device, the second mobile device, and the third mobile device,
a first message of the multiple messages is sent to a first other one of the first mobile device, the second mobile device, and the third mobile device, and
a second message of the multiple messages is sent to a second other one of the first mobile device, the second mobile device, and the third mobile device.

Clause 23. The method of clause 20, wherein each of the one or more messages is a sideline control information (SCI) message.

Clause 24. The method of clause 1, wherein the method does not require receiving, at the first mobile device, a wireless reference signal from the second mobile device.

Clause 25. The method of clause 1, wherein the determining the position of the first mobile device is further based on known positions of the second mobile device and the third mobile device.

Clause 26. The method of clause 1, wherein the first wireless reference signal comprises:

a Positioning Reference Signal (PRS),
a Synchronization Signal Block (SSB),
a Tracking Reference Signal (TRS),
a Channel State Information Reference Signal (CSIRS), or
Demodulation Reference Signal (DMRS), or
any combination thereof.

Clause 27. The method of clause 1, wherein the second wireless reference signal comprises:

a sidelink PRS (SL-PRS),
a DMRS, or
a CSIRS, or
any combination thereof.

Clause 28. A device enabling positioning of a first mobile device, the device comprising:

a transceiver;
a memory; and
one or more processing units communicatively coupled with the transceiver and the memory, the one or more processing units configured to:
obtain a differential angle-of-arrival (AoA) between (a) a first AoA of a first wireless reference signal at a second mobile device and (b) a second AoA of a second wireless reference signal at the second mobile device, wherein:

the first wireless reference signal is transmitted by a third mobile device, and
the second wireless reference signal is transmitted by the first mobile device;
determine a position of the first mobile device based at least in part on the differential AoA; and
provide the position of the first mobile device.

Clause 29. A device enabling positioning of a first mobile device, the device comprising:

means for obtaining a differential angle-of-arrival (AoA) between (a) a first AoA of a first wireless reference signal at a second mobile device and (b) a second AoA of a second wireless reference signal at the second mobile device, wherein:

the first wireless reference signal is transmitted by a third mobile device, and

the second wireless reference signal is transmitted by the first mobile device;

means for determining a position of the first mobile device based at least in part on the differential AoA; and
means for providing the position of the first mobile device.

Clause 30. A non-transitory computer-readable medium storing instructions for enabling positioning of a first mobile device, the instructions comprising code for:

obtaining a differential angle-of-arrival (AoA) between (a) a first AoA of a first wireless reference signal at a second mobile device and (b) a second AoA of a second wireless reference signal at the second mobile device, wherein:

the first wireless reference signal is transmitted by a third mobile device, and

the second wireless reference signal is transmitted by the first mobile device;

determining a position of the first mobile device based at least in part on the differential AoA; and

providing the position of the first mobile device.

**Claims**

1. A method (1300) for enabling positioning of a first mobile device, the method comprising:

    obtaining (1310) a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device;
    determining (1320) a position of the first mobile device based at least in part on performing multilateration using the plurality of range sums; and
    providing (1330) the position of the first mobile device.

2. The method of claim 1, wherein each range sum in the plurality of range sums corresponds to a unique ellipse having a pair of foci corresponding to known positions of the second mobile device and the third mobile device.

3. The method of any one of claims 1-2, wherein each range sum in the plurality of range sums is based on timing information associated with the first wireless reference signal, the second wireless reference signal, and a third wireless reference signal transmitted by the third mobile device to the first mobile device.

4. The method of claim 3 wherein obtaining each range sum in the plurality of range sums comprises:

    obtaining a first time difference, the first time difference comprising a time difference between: a time the third wireless reference signal transmitted by the third mobile device is received at the first mobile device, and a time the first mobile device transmits the second wireless reference signal;
    obtaining a second time difference, the second time difference comprising a time difference between: a time the first wireless reference signal transmitted by the third mobile device is received at the second mobile device, and a time the second wireless reference signal transmitted by the first mobile device is received at the second mobile device; and
    generating the range sum, based on the first time difference and the second time difference.

5. The method of any one of claims 1-4, wherein the method is performed by the first mobile device.

6. The method of claim 5, wherein obtaining the first time difference comprises generating the first time difference at the first mobile device, based on measuring the time the third wireless reference signal is received at the first mobile device and measuring the time the first mobile device transmits the second wireless reference signal; and obtaining the second time difference comprises receiving the second time difference from the second mobile device.

7. The method of any one of claims 1-4, wherein the method is performed by the second mobile device.

8. The method of claim 7, wherein obtaining the first time difference comprises receiving the first time difference from the first mobile device; and obtaining the second time difference comprises generating the second time difference at the second mobile device, based on measuring the time the first wireless reference signal is received at the second mobile device and measuring the time the second wireless reference signal is received at the second mobile device.

9. The method of any one of claims 1-8, wherein the first wireless reference signal and the third wireless reference signal comprise the same signal.

10. The method of any one of claims 1-8, wherein the first wireless reference signal and the third wireless reference signal comprise different signals, and the range sum is further based on a difference in time between the transmission of the first wireless reference signal and the third wireless reference signal.

11. The method of any one of claims 1-10, wherein the second mobile device and the third mobile device are out of range of a Transmission Reception Point, TRP.

12. The method of any one of claims 1-11, wherein the method does not require transmitting a wireless reference signal from the second mobile device to the first mobile device.

13. The method of any one of claims 1-12, wherein the first wireless reference signal comprises: a Positioning Reference Signal, PRS, a Synchronization Signal Block, SSB, a Tracking Reference Signal, TRS, a Channel State Information Reference Signal, CSIRS, or Demodulation Reference Signal, DMRS, or any combination thereof, and/or wherein the second wireless reference signal comprises: a sidelink PRS, SL-PRS, a DMRS, or a CSIRS, or any combination thereof.

14. A device enabling positioning of a first mobile device, the device comprising:

a transceiver;
a memory (1460); and
one or more processing units (1410) communicatively coupled with the transceiver and the memory, the one or more processing units configured to:

obtain (1310) a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device;
determine (1320) a position of the first mobile device based at least in part on performing multilateration using the plurality of range sums; and
provide (1330) the position of the first mobile device.

15. A non-transitory computer-readable medium storing instructions for enabling positioning of a first mobile device, the instructions comprising code for:

obtaining (1310) a plurality of range sums, each range sum in the plurality of range sums comprising (a) a first range between the first mobile device and a second mobile device and (b) a second range between the first mobile device and a third mobile device, wherein: the second range is based on a first wireless reference signal transmitted by the third mobile device, and the first range is based on a second wireless reference signal transmitted by the first mobile device;
determining (1320) a position of the first mobile device based at least in part on performing multilateration using the plurality of range sums; and
providing (1330) the position of the first mobile device.

**FIG. 1**

FIG. 2

5G NR Positioning System 200

**FIG. 3**

**FIG. 4**

Target UE
410

Reference signal beam
510

Initiative UE
430

Anchor UE
420

## FIG. 5A

Target UE
410

First reference signal beam
520

Initiative UE
430

Anchor UE
420

Second reference signal beam
530

## FIG. 5B

**FIG. 6**

**FIG. 7**

EP 4 644 940 A2

**FIG. 8**

FIG. 9

EP 4 644 940 A2

430-1 Initiative UE₁ | 430-2 Initiative UE₂ | ... | 430-M Initiative UE_M | 420-1 Relay UE₁ | 420-2 Relay UE₂ | ... | 420-N Relay UE_N | 410-1 Target UE₁ | 410-2 Target UE₂ | ... | 410-O Target UE_O

(1) Exchange capabilities, resources, QoS, etc. **1002**

(2) Propose PRS₁, PRS₂, PRS₃, ..., PRS_P **1004**

(3) Confirm PRS configurations **1006**

1008 (4) PRS₁ trans.

1008 (4) RSTD meas.

1008 (4) PRS₂ trans.

1008 (4) Rx-Tx time meas.

1010 (5) PRS₃ trans.

1010 (5) RSTD meas.

1010 (5) PRS₄ trans.

1010 (5) Rx-Tx time meas.

1012 (6) PRS_P-1 trans.

1012 (6) RSTD meas.

1012 (6) PRS_P trans.

(6) Rx-Tx time meas.

(7) Exchange measurements **1014**

(8) Calculate relative location(s) **1016**

(9) Repeat steps (1)-(8) **1018**

**FIG. 10**

Example: Single SCI

1102

1104    1106    1108    SCI

| Source ID: UE1 | Destination: UE0<br>Measure: PRS2<br>Transmit: PRS1<br>Report Rx-Tx between<br>PRS2 & PRS1 | Destination: UE2<br>Measure: PRS0, PRS1<br>Report RSTD between<br>PRS0 & PRS1 |

## FIG. 11A

Example: Multiple SCIs

1110

1112    1114    SCI-1

| Source ID: UE1 | Destination: UE2<br>Measure: PRS0, PRS1<br>Report RSTD between<br>PRS0 & PRS1 |

1120

1122    1124    SCI-2

| Source ID: UE1 | Destination: UE0<br>Measure: PRS2<br>Transmit: PRS1<br>Report Rx-Tx between<br>PRS2 & PRS1 |

## FIG. 11B

1200

1210

Obtaining a differential AoA between a first AoA of a first wireless reference signal at a second mobile device and a second AoA of a second wireless reference signal at the second mobile device, wherein:
- the first wireless reference signal is transmitted by a third mobile device, and
- the second wireless reference signal is transmitted by the first mobile device

1220

Determining the position of the first mobile device based at least in part on the differential AoA

1230

Providing the position of the first mobile device

# FIG. 12

1300

1310

Obtaining a plurality of range sums, each range sum in the plurality of range sums comprising (a) a first range between the first mobile device and a second mobile device and (b) a second range between the first mobile device and a third mobile device, wherein:
- the first wireless reference signal is transmitted by a third mobile device, and
- The second wireless reference signal is transmitted by the first mobile device

1320

Determining the position of the first mobile device based at least in part on performing multilateration using the plurality of range sums

1330

Providing the position of the first mobile device

## FIG. 13

FIG. 14

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20220100697